# EUROPÄISCHE PATENTSCHRIFT

(11) **EP 2 421 774 B1**
(45) Veröffentlichungstag und Bekanntmachung des Hinweises auf die Patenterteilung: **18.12.2013**
(21) Anmeldenummer: 10717546.5
(22) Anmeldetag: 22.04.2010
(51) Int. Cl.: B65G 1/137

(54) **LAGER- UND KOMMISSIONIERSYSTEM UND VERFAHREN ZUM BETREIBEN DESSELBEN IM BATCH-BETRIEB**
STORAGE AND COMMISSIONING SYSTEM AND METHOD FOR OPERATING THE SAME IN BATCH MODE
SYSTÈME DE STOCKAGE ET DE PRÉPARATION ET PROCÉDÉ PERMETTANT DE FAIRE FONCTIONNER CE DERNIER EN MODE DE TRAITEMENT PAR LOTS

(30) Priorität: 24.04.2009 DE 102009019511
(43) Veröffentlichungstag der Anmeldung: 29.02.2012
(73) Patentinhaber: SSI Schäfer Peem GmbH, 8051 Graz-Gösting (AT)
(72) Erfinder: SUESS, Heiko, A-8044 Graz (AT); STUEBINGER, Klaus, A-8055 Graz-Puntigam (AT); BUCHMANN, Rainer, 8046 Graz (AT)
(74) Vertreter: Wegener, Markus
(86) Internationale Anmeldenummer: PCT/EP2010/002460
(87) Internationale Veröffentlichungsnummer: WO 2010/127769

(56) Entgegenhaltungen:
- DE-A1- 10 340 143
- DE-C1- 3 413 157

## Beschreibung

Die vorliegende Erfindung betrifft ein Lager- und Kommissioniersystem mit Kommissionierstationen zum manuellen Kommissionieren von Artikeln in Auftragsbehälter, wobei die Artikel vor einem Verteilen auf die Auftragsbehälter "batchweise" vorkommissioniert werden, d.h. gruppenweise zusammengestellt und gemäß der Gruppe aus einem Lager entnommen werden.
Das Dokument DE 103 40 143 A1 offenbart einen Kommissionierplatz, zu dem über eine Lagerbehälter-Förderstrecke Lagerbehälter transportierbar sind und von dem über eine Auftragsbehälter-Förderstrecke Auftragsbehälter, in die hinein von einer Kommissionierperson aus den Lagerbehältern Artikel kommissioniert werden, abtransportierbar sind, wobei der Kommissionierplatz einen Puffer für mehrere zu kommissionierende Auftragsbehälter aufweist, und wobei die Auftragsbehälter mittels eines Shuttles in den Puffer ein- und/oder auslagerbar sind.

Aus den Dokumenten DE 34 13 157 sowie EP 0 215 967 sind ein Verfahren und eine Vorrichtung zum rechnergesteuerten Zusammenstellen von Warensendungen bekannt.

Dort wird ein Verfahren beschrieben, gemäß dem ein Kommissionierlager in verschiedene Zonen unterteilt wird, wobei in wenigstens einer der Zonen nach dem Prinzip "Mann zur Ware" von Hand kommissioniert wird. Zu befüllende Kommissionierbehälter (Auftragsbehälter) werden rechnergesteuert durch das Lager transportiert. Jede Zone des Lagers bekommt solche Auftragsbehälter zugeführt, denen wiederum Kommissionieraufträge zugeordnet sind, deren Artikel in der von Hand zu kommissionierenden Zone des Lagers gelagert sind. Es werden dazu Gruppen von Auftragsbehältern ("Batchs") gebildet. Ein Steuerungsrechner bestimmt einen wegoptimierten Sammelauftrag, gemäß dem Artikel in Abhängigkeit von Artikeltyp und Anzahl aus der Lagerzone geholt und anschließend auf die gruppierten Auftragsbehälter verteilt werden. Zur Abarbeitung des Holauftrags läuft eine Kommissionierperson mit einem Sammelwagen wegoptimiert durch das Lager. Der Sammelwagen hält ein Tablar, welches z.B in 10 Fächern unterteilt ist, was der Anzahl der abzuarbeitenden Gruppe von Auftragsbehälter entspricht. Jedem Auftragsbehälter ist dann ein Fach des Tablars zugeordnet. Pro Fach wird ein Sammelauftrag bestimmt. Jeder Sammelauftrag wird ausgedruckt und in das entsprechende Fach zur Abarbeitung (Einsammeln von Artikeln aus dem Lager) gelegt. Sind alle Sammelaufträge abgearbeitet, kehrt der Kommissionierer mit dem Sammelwagen, auf dem sich das Tablar befindet, zu einer sog. Transferstation zurück, wo das Tablar vom Wagen getrennt wird. Das Tablar wird dann automatisiert über eine Fördertechnik verbracht, auf der die wartenden Auftragsbehälter unter dem Tablar automatisiert hindurchgeführt werden, wobei der Boden des Tablars so ausgebildet ist, dass jedes Fach individuell automatisiert nach unten geöffnet werden kann, um so die gesammelten Artikel des Fachs in den darunter durchgeführten Auftragsbehälter freizugeben.

Nachteilig an diesem bekannten System und Verfahren ist die hohe Kommissionierfehlerquote. Zu keinem Zeitpunkt wird überprüft, ob die aus dem Lager entnommenen Artikel die richtigen Artikel sind. Dies muss nachträglich in einer Kontrollzone geschehen. Es wird nicht geprüft, ob die entnommenen Artikel in das richtige Fach abgegeben wurden. Es wird nicht geprüft, ob die richtige Anzahl von Artikeln aus dem Lager entnommen wurde. Es wird nicht geprüft, ob das richtige Tablarfach an den richtigen Auftragsbehälter abgegeben wurde. Es ist nicht sichergestellt, dass die Böden der Fächer immer funktionsgerecht geöffnet werden. Es wird nicht verifiziert, ob die aus den Fächern herabfallenden Artikel auch tatsächlich in dem zugeordneten Auftragsbehälter landen. All dies macht es bei diesem vorbekannten Verfahren und System erforderlich, eine zusätzliche Kontrollzone einzurichten, wo manuell überprüft wird, ob tatsächlich alle Artikel des Kommissionierauftrags auch im zugehörigen Auftragsbehälter vorhanden sind. Dies erhöht sowohl den Arbeitsaufwand als auch die Investitionskosten, da neben dem Kommissionierplatz auch noch ein Kontrollplatz eingerichtet werden muss.

Ein weiterer Nachteil ist dabei in den relativ hohen Kosten für das Vorsehen der vollständig automatisierten Transferstation zu sehen. Durch die vielen mechanischen Komponenten der Transferstation, wie z.B. den Hubmechanismus, die Öffnungsmechanismen, usw., ist auch die Transferstation wartungs- und fehleranfällig.

Außerdem wird immer mehr als ein Sammelwagen benötigt, um dieses vorbekannte System kontinuierlich betreiben zu können. Während sich ein Sammelwagen in der Transferstation befindet, um das Tablar vom Wagen zu trennen, steht der Kommissionierer entweder wartend vor der Transferstation oder es muss mindestens ein zweiter Kommissionierwagen inklusive Tablar vorgesehen werden, damit der Kommissionierer einen nächsten Sammelauftrag abarbeiten kann, während der erste Sammelwagen in der Transferstation bearbeitet wird.

Ein weiterer Nachteil ist darin zu sehen, dass durch die Fachunterteilung der Tablare eine ungünstige Einschränkung der Dimensionen der zu kommissionierenden Artikel vorliegt. Ausgehend von einer herkömmlichen Dimension eines Auftragsbehälters (z.B. 60 x 40 x 30 cm³) ist der Abmessung des Tablars eine natürliche Grenze gesetzt. Diese Grenze wird zum Einen durch die Handhabbarkeit des Tablars bzw. des Sammelwagens während eines Kommissioniergangs durch das Lager definiert. Geht man davon aus, dass das Tablar eine Länge von ca. 1 m und eine Breite von weniger als 60 cm aufweist, so können die Fächer maximal 10 cm breit sein, wenn man 10 Fächer nebeneinander vorsehen will, wie es in den oben genannten Dokumenten vorgeschlagen wird. Artikel, wie sie üblicherweise z.B. im Versandhandel gehandhabt werden, weisen aber Seitenlängen auf, die in der Regel größer als 10 cm sind. Somit können nur relativ wenige Artikel (z.B. 2-3) pro Fach eingesammelt werden, so dass es fraglich ist, ob mit dem bekannten Verfahren z.B. ein Versandhandelslager überhaupt effizient betrieben werden kann.

Ein zusätzlicher Nachteil bei der Handhabung der Artikel ist im automatisierten Abwurf der Artikel in die Auftragsbehälter zu sehen. Durch das bloße Öffnen der Fachböden, fallen die Artikel wild durcheinander in die Auftragsbehälter. Im Versandhandel werden die Artikel üblicherweise direkt in die Versandträger ( z.B. Pakete aus Karton) kommissioniert. Eine in diesem Sinne "chaotische" Abgabe der Artikel an den Auftragsbehälter ist in der Regel unerwünscht. Aus Platzgründen ist es erforderlich, die Artikel sauber sortiert und gestapelt in die Auftragsbehälter zu schichten, um möglichst viele Artikel in ein und denselben Auftragsbehälter geben zu können bzw. um möglichst wenig Raum für eine vorgegebene Anzahl von Artikel zu benötigen.

Ferner ist ein weiteres Verfahren zum Batch-Kommissionieren bekannt. Dabei fährt der Kommissionierers bspw. auf einem Regalbediengerät bzw. einem Regalförderzeug durch Regalgassen eines Lagers, wobei er eine Vielzahl von Auftragsbehältern direkt auf dem Fahrzeug mit sich führt. Bei diesem "Mann-zur-Ware"-Kommissionierprinzip werden einzelne Bereitstellungsplätze des Lagers angefahren, wobei dann alle Artikel, die in diesem Bereitstellungsplatz bevorratet sind und zur Kommissionierung benötigt werden, entnommen werden. In der Regel sind die Auftragsbehälter aber nach der Abarbeitung des entsprechenden Kommissionierauftrags so schwer, dass der Einsatz von Maschinen zum Transport mehrerer Auftragsbehälter erforderlich ist. Ein freies (maschinenunabhängiges) Bewegen des Kommissionierers durch das Lager ist nicht mehr möglich. Die benötigten Regalbediengeräte bzw. Regalförderzeuge sind teuer und schränkten die Flexibilität ein, insbesondere wenn man sich in einem Hochregallager bewegt.

Ausgehend von dieser Sachlage ist es eine Aufgabe der vorliegenden Erfindung, ein verbessertes Lager- und Kommissioniersystem sowie ein entsprechendes Kommissionierverfahren für einen Batch-Betrieb vorzusehen, das die oben aufgeführten Nachteile überwindet.

Diese Aufgabe wird erfindungsgemäß mit einem Verfahren zum Betreiben des Lager- und Kommissioniersystems gelöst, wobei das Verfahren die folgenden Schritte aufweist: Erfassen einer Vielzahl von Kommissionieraufträgen, wobei jedem Kommissionierauftrag, der aus einer Vielzahl von verschiedenen Artikeltypen in unterschiedlichen Anzahlen bestehen kann, ein Auftragsbehälter zugewiesen wird; deren Kommissionieraufträge alle Artikel aus einem einzigen Lagerbereich benötigen, dem wiederum eine Kommissionierstation zugeordnet ist; Verbringen der Gruppe von Auftragsbehältern in die Kommissionierstation, wobei jeder Auftragsbehälter auf einem von mehreren Pufferplätzen in der Kommissionierstation zwischengespeichert wird, wobei jeder Pufferplatz eine Anzeigeeinrichtung aufweist; Bestimmen eines Sammelauftrags aus den Kommissionieraufträgen, die der Gruppe von Auftragsbehältern zugeordnet ist; Entnehmen der zu kommissionierenden Artikel aus dem Lagerbereich gemäß dem Sammelauftrag, in dem eine Kommissionierperson wegoptimiert durch den Lagerbereich läuft, die Artikel des Sammelauftrags in entsprechender Anzahl aus angezeigten Bereitstellungsplätzen entnimmt und zum Zwecke einer Zwischenspeicherung ungeordnet in eine transportable Sammeleinrichtung gibt, die die Kommissionierperson mit sich führt; sobald alle Artikel des Sammelauftrags entnommen und zwischengespeichert sind, manuelles Verteilen der entnommenen Artikel auf die Gruppe der Auftragsbehälter in der Kommissionierstation, wobei mindestens ein Artikel jedes entnommenen Artikeltyps erfasst und erkannt wird, bevor der Kommissionierperson mittels der Anzeigeeinrichtungen angezeigt wird, in welchen Auftragsbehälter wie viele Artikel des erfassten Artikeltyps aus der Sammeleinrichtung umzusetzen sind.

Mit dem erfindungsgemäßen Verfahren ist es möglich, einen Kommissioniervorgang im Wesentlichen in zwei Stufen aufzuteilen. In einer ersten Stufe werden alle für die Abarbeitung einer Gruppe von Auftragsbehältern benötigten Artikel aus dem Lager geholt. In einer zweiten Stufe werden die auf diese Weise gesammelten Artikel auf die einzelnen Auftragsbehälter verteilt. Die Kommissionierperson muss dabei im Wesentlichen drei Handlungen vornehmen, nämlich das Entnehmen und das ungeordnete Sammeln von Artikeln aus dem Lager; das Umsetzen der gesammelten Artikel in die Auftragsbehälter und das Zuordnen (Sortieren) der gesammelten Artikel zu den vorbestimmten Auftragsbehältern. All diese Handlungen erfolgen unter einem höchst möglichen Maß von Kontrolle und Überprüfung. Die Kommissionierperson muss sich im Vergleich zu dem bekannten Verfahren nur wenig konzentrieren, um alle Schritte richtig durchzuführen. Während des Einsammelns der Artikel aus dem Lager ist ggf. lediglich darauf zu achten, dass die richtige Anzahl entnommen wird. Das Abgeben der entnommenen Artikel in einen Sammelbehälter erfolgt chaotisch. Eine Abgabe in ein vorherbestimmtes Fach ist nicht erforderlich, da der Sammelbehälter nicht unterteilt ist. Dadurch lässt sich erheblich Zeit gewinnen. Der Kommissionier erhält aber auch nur einen einzigen Sammelauftrag, so dass aufgrund der reduzierten Anzahl von Sammelaufträgen weniger Fehler auftreten. Außerdem lässt sich so tatsächlich eine Wegoptimierung umsetzen, da der Kommissionierer bzw. die Kommissionierperson nicht mehrere Sammelaufträge parallel abarbeiten muss, wie es im Stand der Technik üblich war.

Bevor die gesammelten Artikel auf die Auftragsbehälter verteilt werden, werden sie in der Kommissionierstation erfasst und identifiziert. Ein übergeordneter Steuerungsrechner aktiviert in Abhängigkeit von dem identifizierten Artikeltyp zum Beispiel Lampen, die in unmittelbarer Nähe von den Auftragsbehältern an den Pufferplätzen vorgesehen sind und die Auftragsbehälter halten, die den erkannten Artikeltyp benötigen. Die Kommissionierperson wird dadurch visuell zum richtigen Auftragsbehälter bzw. zu den richtigen Auftragsbehältern geführt. Eine Fehlzuordnung ist nahezu ausgeschlossen, da die Kommissionierperson den Artikel noch immer in der Hand hält, den sie kurz zuvor gescannt hat. Die Kommissionierperson "sortiert" die zu kommissionierenden Artikel also nur ein einziges Mal, nämlich während des Zuordnens in den bzw. die richtigen Auftragsbehältern während des Verteilens in der Kommissionierstation. Im Stand der Technik musste die Kommissionierperson bereits beim Einsammeln der Artikel eine erste Sortierung vornehmen, nämlich wenn ein aus dem Lager entnommener Artikel in ein Fach des Tablars auf dem Sammelwagen abzugeben war. Eine weitere Sortierung war erforderlich, wenn die in den Fächern gesammelten Artikel an die wartenden Auftragsbehälter abzugeben waren, da in diesem Moment sichergestellt werden musste, dass ein bestimmtes Fach auch tatsächlich in den vorbestimmten Auftragsbehälter geleert wurde.

Je nach Ausführungsform weisen die Anzeigeeinrichtungen an den Pufferplätzen gemäß der vorliegenden Erfindung neben visuellen Signalgebern, wie zum Beispiel Lampen, auch Zifferanzeigen auf, mit denen der Kommissionierperson angezeigt werden kann, wie viele Artikel eines gerade erfassten und identifizierten Artikeltyps in einen entsprechenden Auftragsbehälter abzugeben sind. Dies macht die Arbeit für den Kommissionierer sehr einfach, da er jeden eingesammelten Artikeltyp nur ein einziges Mal scannen muss und dann diesen erfassten und identifizierten Artikeltyp solange auf die Auftragsbehälter verteilt, bis alle gesammelten Artikel dieses speziellen Artikeltyps auf die Auftragsbehälter verteilt sind.

Da Kommissionierfehler gemäß dem erfindungsgemäßen Verfahren nahezu ausgeschlossen sind, ist es auch nicht mehr erforderlich, eine eine der Kommissionierstation nachgeordnete Kontrollstation vorzusehen. Eine Kontrolle eines einmal fertig kommissionierten Auftrags ist nicht mehr erforderlich. Dadurch lassen sich Investitionskosten sowie Arbeitszeit einsparen. Das erfindungsgemäße Verfahren ist somit effizienter als das bekannte Verfahren. Die Leistung ist höher, da im Mittel mehr Kommissionieraufträge pro Zeiteinheit erledigt werden können.

Die Gesamtinvestitionskosten sind ferner geringer, da auf eine Automatisierung des zweiten Schritts verzichtet wird. Es werden im Vergleich zum bekannten Verfahren weniger Sammeleinrichtungen benötigt. Wenn in einem Lagerbereich mit zugeordneter Kommissionierstation nur eine einzige Kommissionierperson arbeitet, ist auch lediglich eine Sammeleinrichtung vorzusehen. Mehrere Sammeleinrichtungen vorzusehen ist nicht erforderlich, um einen kontinuierlichen Betrieb der Kommissionierstation sicherzustellen.

Während eine fertig kommissionierte Gruppe von Auftragsbehältern abtransportiert wird, um gegen eine neue Gruppe von Auftragsbehältern ausgetauscht zu werden, kann die Kommissionierperson bereits die Kommissionierstation verlassen, um sich einem neuen Sammelauftrag zu widmen, der gemäß den neuen, gerade antransportierten Auftragsbehältern (vorab) erstellt wird. Auf diese Weise lässt sich wieder Zeit einsparen.

Gemäß einer bevorzugten Ausführungsform wird jeder entnommene Artikel des Sammelauftrags vor dem Verteilen erfasst und erkannt, indem die Kommissionierperson jeden entnommenen Artikel in der Kommissionierstation einzeln scannt, wobei die Anzeigeeinrichtung der Pufferplätze dann lediglich anzeigen muss, in welchen Auftragsbehälter dieser eine erkannte Artikel umzusetzen ist.

Wenn jeder Artikel des Sammelauftrags kurz vor dem Verteilen auf die Auftragsbehälter erfasst und identifiziert wird, ist es nicht mehr erforderlich, anzuzeigen, wie viele Artikel dieses Typs auf einen jeweiligen Auftragsbehälter zu verteilen sind. Diese Vorgehensweise erhöht zwar leicht den Arbeitsaufwand, da alle Artikel eines gesammelten Sammelauftrags einzeln erfasst werden. Jedoch erhöht sich dadurch auch die Kommissionierqualität, da es zu keinen Fehlern hinsichtlich der abzugebenden Anzahl von Artikeln pro Auftragsbehälter kommen kann. Die Kommissionierperson bekommt lediglich einen einzigen Auftragsbehälter angezeigt und muss sich deshalb nicht darauf konzentrieren, welche anderen Auftragsbehälter neben dem gerade abgearbeiteten Auftragsbehälter ebenfalls Artikel dieses Typs benötigen. Eine Quittierung eines Abwurfs eines gesammelten Artikels in einen der Auftragsbehälter erfolgt automatisch durch das Einlesen des nächsten Artikels, da der vorhergehende Artikel abgeworfen ist.

Ferner ist es bevorzugt, wenn jeder Lagerbereich von mehr als einer Kommissionierperson gleichzeitig bedient wird, wobei vorzugsweise jeder Kommissionierperson ein individuelles Anzeigesignal (Farbe, Frequenz, Ton, Zeichen, etc) zugeordnet ist, um Auftragsbehälter in der Kommissionierstation mittels ihrer Anzeigeeinrichtungen identifizierbar zu machen.

Es gibt verschiedene Möglichkeiten, wie zum Beispiel zwei Kommissionierpersonen pro Lagerbereich und Kommissionierstation parallel arbeiten können. Gemäß einer ersten Variante wird die erste Stufe von einem ersten Kommissionierer und die zweite Stufe von einem zweiten Kommissionierer durchgeführt. Gemäß einer zweiten Variante wird ein Sammelauftrag in zwei Teilsammelaufträge aufgeteilt, die dann sequentiell oder parallel abgearbeitet werden können, wobei jeder Kommissionierer beide Stufen Durchläuft. Gemäß einer dritten Variante werden mehrere Sammelaufträge, gegebenenfalls auch Teilsammelaufträge, parallel bearbeitet. Um zu vermeiden, dass sich die Kommissionierer sich bei einem gleichzeitigen Einwerfen bzw. geordneten Einsortieren in die Auftragsbehälter gegenseitig stören bzw. fehlgeführt werden, kann zum Beispiel eine zweifarbige Anzeigeeinheit, wie zum Beispiel eine rot und gleichzeitig grün aufleuchtende Lampe vorgesehen werden. Sollte es während des Verteilens der gesammelten Artikel auf die Auftragsbehälter dazu kommen, dass beide Kommissionierer ihren gerade erfassten und identifizierten Artikel in ein und denselben Auftragsbehälter abgeben müssen, so wird die Anzeigeeinrichtung dieses Auftragsbehälters erkennbar mit beiden Farben beleuchtet. Gegebenenfalls sind dann auch zwei Ziffernanzeigen vorzusehen, je nach Variante des oben beschriebenen Abgabevorgangs.

Gemäß einer weiteren vorteilhaften Ausgestaltung werden der Kommissionierperson die Bereitstellungsplätze vor einer Entnahme mittels einer Lese- und Anzeigeeinrichtung angezeigt, die die Kommissionierperson mit sich führen kann.

Exemplarisch wird die Kommissionierperson ein sogenanntes "Handheld-Terminal" oder einen Fingerscanner mit zugehöriger Anzeigevorrichtung mit sich führen, wobei die Anzeigevorrichtung zum Beispiel am Unterarm des Kommissionierers befestigt werden kann. Ein Ausdrucken eines Sammelauftrags ist nicht erforderlich. Der von der übergeordneten Steuereinrichtung erzeugte Sammelauftrag wird vorzugsweise elektronisch an den Kommissionierer übermittelt, und zwar gemäß einer wegoptimierten Reihenfolge. Der Kommissionier läuft dann durch den ihm zugeordneten Lagerbereich und sammelt die für die Abarbeitung der Gruppe von Kommissionieraufträgen (Batch) erforderlichen Artikel aus dem Lager ein.

Ferner ist es bevorzugt, wenn die Bereitstellungsplätze vor einer Artikelentnahme erfasst und an eine Steuereinrichtung zur Überprüfung übermittelt werden.

Auf diese Weise wird eine zusätzliche Sicherheitsstufe eingebaut. Bevor der Kommissionierer einen Artikel aus dem ihm zuvor angezeigten Bereitstellungsplatz des Lagers in den Sammelwagen gibt, scannt er beispielsweise eine Bereitstellungsplatz-spezifische Kennung, die am Bereitstellungsplatz zum Beispiel in Form eines Strichcodes angebracht ist. Auf diese Weise kann die übergeordnete Steuereinrichtung verifizieren, dass der Kommissionierer Artikel aus dem richtigen Bereitstellungsplatz entnimmt. Gegebenenfalls kann dem Kommissionierer auch signalisiert werden, dass er gerade Artikel aus dem falschen Bereitstellungsplatz entnimmt.

Bei einer weiteren Ausgestaltung wird eine Abarbeitung einer Gruppe von Kommissionieraufträgen durch Erfassen einer Kennung der Kommissionierstation durch die Kommissionierperson initiiert.

Um einer übergeordneten Steuereinrichtung zu signalisieren, dass ein Kommissionierer in seinem Lagerbereich bereit ist, eine neue Gruppe von Kommissionieraufträgen abzuarbeiten, kann der Kommissionierer beispielsweise mit seiner Lese- und Anzeigeeinrichtung einen Strichcode scannen, der Kommissionierstation- und Lagerbereich-spezifisch (d.h. lagerzonenspezifisch) ist. Auf diese Weise bekommt der Steuerrechner signalisiert, dass der Kommissionierer bereit ist, einen neuen Sammelauftrag anzunehmen. Gegebenenfalls kann der Steuerrechner den Transport einer neuen Gruppe von Auftragsbehältern in die entsprechende Kommissionierstation initiieren, sollte die Lagerzone nicht bereits über eine wartende Gruppe von Auftragsbehältern verfügen. Anderenfalls kann der Kommissionierer auch in einen anderen Lagerbereich entweder zur Unterstützung oder zur Abarbeitung einer anderen Gruppe von Kommissionieraufträgen abkommandiert werden.

Weiter ist es von Vorteil, wenn ein Teilsammelauftrag betreffend einen sperrigen Artikel separat zum eigentlichen Sammelauftrag, der dem restlichen Sammelauftrag entspricht, in Form eines Einzelauftrags abgearbeitet wird.

Sammelaufträge weisen immer wieder Auftragszeilen vor, die auf eine wie auch immer geartete Art und Weise ungewöhnliche Artikeltypen betreffen. In der Regel handelt es sich hierbei um Artikel der Kategorie "C", die später noch genauer erläutert werden wird. Exemplarisch seien hier besonders sperrige Artikel genannt, die Abmessungen aufweisen, die von den üblichen, restlichen Artikeln stark abweichen. Würde man derartige Artikel ganz normal in die Sammelaufträge integrieren, so könnte es sein, dass die Sammeleinrichtungen eine nicht ausreichende Kapazität aufweisen, um alle Artikel des Sammelauftrags aufnehmen zu können. Um dieses Risiko von vornherein auszuschließen, kann es empfehlenswert sein, derartige sperrige Artikel separat zu kommissionieren. Dazu können zu den entsprechenden sperrigen Artikeltypen entsprechende Vermerke in einer Datenbasis hinterlegt sein, so dass der Steuerrechner beim Erstellen der Sammelaufträge erkennt, dass dieser sperrige Artikeltyp gesondert zu behandeln ist. Anstatt einen einzigen Sammelauftrag zu generieren, wird dann ein Teilsammelauftrag erzeugt, der alle "normalen" Artikel umfasst und ein separater Teilsammelauftrag (Einzelauftrag) erzeugt, der den sperrigen Artikeltyp umfasst. Die Summe dieser Aufträge entspricht dann wiederum dem Gesamtsammelauftrag.

Auf diese Weise wird vermieden, dass es zu unvorhersehbaren Unterbrechungen der Abarbeitung der Kommissionieraufträge kommt.

Außerdem ist es von Vorteil, wenn für jeden Auftragsbehälter eine Behälterkennung erfasst wird, die dem Pufferplatz zugeordnet wird, auf dem der jeweilige Auftragsbehälter in der Kommissionierstation zwischengespeichert wird.

Auf diese Weise kann sichergestellt werden, dass tatsächlich der Auftragsbehälter auf einem Pufferplatz steht, den der Steuerungsrechner erwartet. Üblicherweise werden die Behälterkennungen lediglich am Eingang einer Kommissionierzone (Lagerbereich inklusive Kommissionierstation) erfasst. Nun kann es aber sein, dass auf dem (fördertechnischen) Weg zwischen dem Eingang der Zone und der Kommissionierstation die Reihenfolge der Auftragsbehälter verändert wird, schlimmstenfalls wird ein Behälter vollständig entfernt, so dass die erwartete Reihenfolge nicht mehr mit der tatsächlichen Reihenfolge übereinstimmt. Deshalb kann am Eingang der Kommissionierstation die Reihenfolge der Auftragsbehälter durch Erfassen der jeweiligen Behälterkennungen (erneut) überprüft und verifiziert werden. Dies verhindert falsche Kommissionieren zusätzlich.

Ferner wird die oben genannte Aufgabe mit einem Lager- und Kommissioniersystem zum parallelen, manuellen Abarbeiten einer Gruppe von Kommissionieraufträgen gelöst, wobei das System aufweist: eine Auftragsbehälter-Fördertechnik zum automatisierten An- und Abtransport von Auftragsbehältern; eine Kommissionierstation, wobei die Kommissionierstation mehrere Pufferplätze zur jeweiligen Aufnahme und Zwischenspeicherung eines Auftragsbehälters aus einer Gruppe von Auftragsbehältern aufweist, wobei jedem Auftragsbehälter ein Kommissionierauftrag der Gruppe von Kommissionieraufträgen zugeordnet ist; einen Lagerbereich, der der Kommissionierstation zugeordnet ist und in welchem Artikel, die zur Abarbeitung der Gruppe von Kommissionieraufträgen benötigt werden, vorzugsweise sortenrein, in Bereitstellungsplätzen bevorratet sind; eine transportable Sammeleinrichtung, die von einer Kommissionierperson während eines Sammelvorgangs durch den Lagerbereich mitgeführt wird, um in einer ersten Stufe alle Artikel, die zur Abarbeitung der Gruppe von Kommissionieraufträgen benötigt werden, aus dem Lagerbereich zu holen, indem die Artikel entnommen und in der Sammeleinrichtung zwischengespeichert werden; eine Lese- und Anzeigeeinrichtung, die der Kommissionierperson zugeordnet ist, die die Kommissionierperson mit sich führt und über die der Kommissionierperson basierend auf dem Sammelauftrag Informationen zu Artikeln im Lagerbereich anzeigbar sind; eine Artikelleseeinrichtung zum Erfassen und Erkennen von gesammelten Artikeln des Sammelauftrags nach Artikeltyp; eine Vielzahl von Anzeigeeinrichtungen, wobei jedem Pufferplatz eine Anzeigeeinrichtung zugeordnet ist; und eine Steuereinrichtung, die angepasst ist: die Gruppe von Auftragsbehältern für die Kommissionierstation in Abhängigkeit von den im Lagerbereich bevorrateten Artikeln zusammenzustellen und zum Lagerbereich zu bewegen; einen wegoptimierten Sammelauftrag für die Artikel des Lagerbereichs gemäß der Gruppe von Kommissionieraufträgen zu erzeugen; der Kommissionierperson den Sammelauftrag anzuzeigen; die Anzeigeeinrichtungen der Pufferplätze derart zu betätigen, dass der Kommissionierperson, nach Beendigung des Sammelvorgangs gemäß der ersten Stufe, in einer zweiten Stufe basierend auf einem zuvor mittels der Artikelleseeinrichtung erkannten Artikels des Sammelauftrags, angezeigt wird, in welchen Auftragsbehälter der erkannte Artikel zu geben ist; und die Gruppe von Auftragsbehältern aus der Kommissionierstation abzutransportieren, wenn alle Artikel gemäß der zweiten Stufe auf die Gruppe der Auftragsbehälter verteilt sind.

Die oben genannten Elemente sind erforderlich, um das zuvor erläuterte erfindungsgemäße Kommissionierverfahren in die Tat umzusetzen.

Gemäß einer bevorzugten Ausführungsform ist der Lagerbereich gegenüberliegend zur Kommissionierstation angeordnet und weist vorzugsweise Regale auf.

Fachbodenregale lassen sich einfach bestücken. Außerdem können Artikel so leicht entnommen werden.

Gemäß einer bevorzugten Ausführungsform werden in den Regalen im Wesentlichen B- und/oder C-Artikel gelagert.

B- und C-Artikel sind gemäß der ABC-Verteilung (Pareto-Verteilung) Artikel, die in Kommissionieraufträgen statistisch gesehen weniger häufig auftreten. Hier ist sinnvoll, die Kommissionieraufträge manuell abzuarbeiten.

Vorzugsweise weist der Lagerbereich ferner Durchlaufkanäle auf, die direkt an die Kommissionierstation angrenzen, wobei in den Durchlaufkanälen im Wesentlichen A-Artikel bevorratet werden.

A-Artikels sind Artikel, die statistisch gesehen relativ oft auftreten. Um hier die Wege des Kommissionierers möglichst kurz zu halten, werden diese Artikel direkt an der Kommissionierstation bereitgestellt. Vorzugsweise werden diese A-Artikel auch nicht in die Sammelaufträge integriert, sondern getrennt kommissioniert.

Gemäß einer weiteren vorteilhaften Ausgestaltung sind die Pufferplätze durch Fördertechnik, insbesondere Staufördersegmente, implementiert.

Durch den Einsatz von Fördertechnik für die Pufferplätze müssen Auftragsbehälter, die auf den Pufferplätzen stehen, nicht manuell innerhalb der Kommissionierstation bewegt werden. Dies erlaubt einen hohen Grad an Automatisierung der Behälterbeförderung und eine Erhöhung der Ergonomie, da schwere Auftragsbehälter nicht vom Kommissionierer bewegt werden müssen. Sollte es erforderlich sein, können auch Stauförderer eingesetzt werden, um jeden Auftragsbehälter einzeln gemäß Vorgabe bewegen zu können.

Ferner hat es sich als vorteilhaft herausgestellt, wenn die Fördertechnik der Kommissionierstation über Ein- und Ausschleuseinrichtungen an die Auftragsbehälter-Fördertechnik gekoppelt ist und vorzugsweise im Wesentlichen parallel zur Auftragsbehälter-Fördertechnik angeordnet ist.

Die Auftragsbehälter-Fördertechnik stellt somit die Versorgung der Kommissionierstationen, die auch parallel und/oder sequentiell hintereinander angeordnet sein können (jeweils mit entsprechenden zugeordneten Lagerbereich) mit Auftragsbehältern sicher. Über die Ein- und Ausschleusvorrichtungen können aus einem Auftragsbehälter Strom auf der Auftragsbehälter-Fördertechnik beliebige Auftragsbehälter in eine Kommissionierstation bzw. in eine Kommissionierzone ausgeschleust werden, um so die Reihenfolge der Auftragsbehälter (auf der Auftragsbehälter-Fördertechnik) beliebig zu ändern. Der Steuerrechner entscheidet über ein Ausschleusen in Abhängigkeit davon, ob ein zur Abarbeitung des dem Auftragsbehälter zugeordneten Kommissionierauftrags benötigter Artikel in der Kommissionierzone, d.h. dem Lagerbereich, vorhanden ist. Auf diese Weise lassen sich Gruppen von Auftragsbehältern - und somit auch entsprechende Gruppen von Kommissionieraufträgen - bilden. Aus diesen Gruppen von Auftragsbehältern bzw. Gruppen von entsprechenden Kommissionieraufträgen werden dann die Sammelaufträge generiert. Die Kommissionierstation können in Form von U-Förmigen "Bahnhöfen an die Auftragbehälter-Fördertechnik angeschlossen werden, um den Behälterfluss auf dieser Hauptstrecke nicht unnötig zu stören.

Vorzugsweise ist die Lese- und Anzeigeeinrichtung ein Hand-held-Terminal mit integriertem Scanner oder ein Finger-Scanner mit einem separaten Display, wobei der Fingerscanner ringähnlich ausgebildet sein kann und wobei das Display am Körper der Kommissionierperson, vorzugsweise an einem der Arme der Kommissionierperson, anbringbar ist.

Auf die oben angeführten Erläuterungen im Zusammenhang mit der Lese- und Anzeigeeinrichtung wird verwiesen.

Ferner ist es von Vorteil, wenn die Anzeigeeinrichtung der Pufferplätze jeweils mindestens einen optischen Signalgeber aufweist, um zumindest den Pufferplatz, und vorzugsweise auch eine von Eins unterschiedliche Anzahl von umzusetzenden Artikeln des Sammelauftrags, gegenüber der Kommissionierperson anzuzeigen.

Gemäß einer weiteren bevorzugten Ausführungsform ist jeder Bereitstellungsplatz jeweils mit einem weiteren Anzeigeelement versehen, wobei die weiteren Anzeigeelemente den Ort und/oder eine zu entnehmende Artikelanzahl gegenüber der Kommissionierperson signalisieren.

Die damit verbundenen Vorteile und Vorzüge sind bereits oben erläutert worden.

Außerdem ist es von Vorteil, wenn die Artikelleseeinrichtung ein Scanner ist, der entweder an der Kommissionierstation oder der Sammelrichtung montiert ist.

Ist die Artikelleseeinrichtung an der Kommissionierstation montiert, so ermöglicht dies die Erfassung und Identifizierung der gesammelten Artikel am Ort des Umsetzens, wenn die gesammelten Artikel auf die Auftragsbehälter verteilt werden. Auf diese Weise ist sichergestellt, dass zwischen dem Zeitpunkt der Identifizierung gesammelten Artikels und der tatsächlichen Abgabe in einen der Auftragsbehälter möglichst wenig Zeit reicht, so dass die Fehlerquote nahezu Null ist.

Gleiches ist möglich, wenn die Artikelleseeinrichtung an der Sammeleinrichtung montiert ist. Zusätzlich zu den eben genannten Vorteilen ist es dann möglich, auch währen der Entnahme der Artikel aus den Regalen bzw. aus dem Lagerbereich zu verifizieren, ob der entnommene Artikel auch tatsächlich mit dem erwarteten Artikel gemäß Sammelauftrag übereinstimmt. Auch diese Maßnahme erhöht die Kommissionierqualität zusätzlich.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: zeigt eine Draufsicht auf ein Lager- und Kommissioniersystem gemäß der vorliegenden Erfindung.
- Fig. 2: zeigt eine isolierte Draufsicht auf die rechte Kommissionierzone der Fig. 1.
- Fig. 3: zeigt eine isolierte Ansicht einer Anzeigevorrichtung eines Pufferplatzes der Fig. 2.
- Fig. 4: zeigt ein Hand-held-Terminal.
- Fig. 5: zeigt ein Flussdiagramm des erfindungsgemäßen Verfahrens.
- Fig. 6: zeigt detaillierte Schritte eines Teilschritts der Fig. 5.
- Fig. 7: zeigt weitere detaillierte Schritte eines Teilschritts der Fig. 5.
- Fig. 8: zeigt ein Blockdiagramm einer Steuereinrichtung, wie sie bei der vorliegenden Erfindung eingesetzt wird.

In den nachfolgenden Figuren wird ein Lager- und Kommissioniersystem gemäß der vorliegenden Erfindung allgemein mit 10 bezeichnet. Gleiche Merkmale werden in den Figuren mit den gleichen Bezugszeichen versehen. Auf Unterschiede, die auf unterschiedliche Ausführungsformen zurückzuführen sind, wird explizit hingewiesen werden.

Die vorliegende Erfindung arbeitet nach dem Prinzip "Mann zur Ware". Dabei wird zweistufig kommissioniert, was auch als Batch-Kommissionierung bezeichnet wird. Bei einer Batch-Kommissionierung wird eine Gruppe von Kundenaufträgen (Kommissionieraufträgen), die als "Batch" bezeichnet wird, dahingehend zusammengefasst, dass die Artikel in einer ersten Stufe gemäß einer geforderten Gesamtmenge aus einem Lager entnommen werden und die Artikel in einer zweiten Stufe auf Aufträge bzw. Auftragsbehälter (auftragsweise Sortierung) verteilt werden. Die Sortierung - und damit die zweite Kommissionierstufe - wird manuell durchgeführt.

Ein Kommissionierauftrag besteht aus einer bzw. mehreren Auftragspositionen. Eine Auftragsposition wird auch als Auftragszeile bezeichnet. Eine Auftragsposition gibt eine jeweilige Menge eines benötigten Artikeltyps an. Unter einer "Auftrags-Batch" versteht man eine Zusammenfassung mehrerer Kommissionieraufträge zu einem Verarbeitungslos. Im Gegensatz zu einer interaktiven Bearbeitung werden im Batch-Betrieb zusammengeführte Aufträge ohne Unterbrechung durch eine Bedienereingabe eingelastet. Deshalb sollten alle zur Durchführung der Kommissionieraufträge notwendigen Daten bereits vor Beginn der Kommissionierung vorliegen. Im "Batch-Betrieb", der einer Stapelverarbeitung im datentechnischen Sinne gleichkommt, werden alle Vorgänge von einer Datenverarbeitungsanlage mit einem bestimmten Programm zunächst gesammelt und sortiert, um dann sequentiell in einem Schub verarbeitet zu werden.

Ein Auftragsbehälter ist ein Kommissionierbehälter, in dem Artikeleinheiten gemäß Kommissionieraufträgen abgelegt werden. Wenn nachfolgend von einem Auftragsbehälter gesprochen wird, so sind davon allgemein Behälter, Tablare, Kartons, Schalen, Beutel und Ähnliches umfasst.

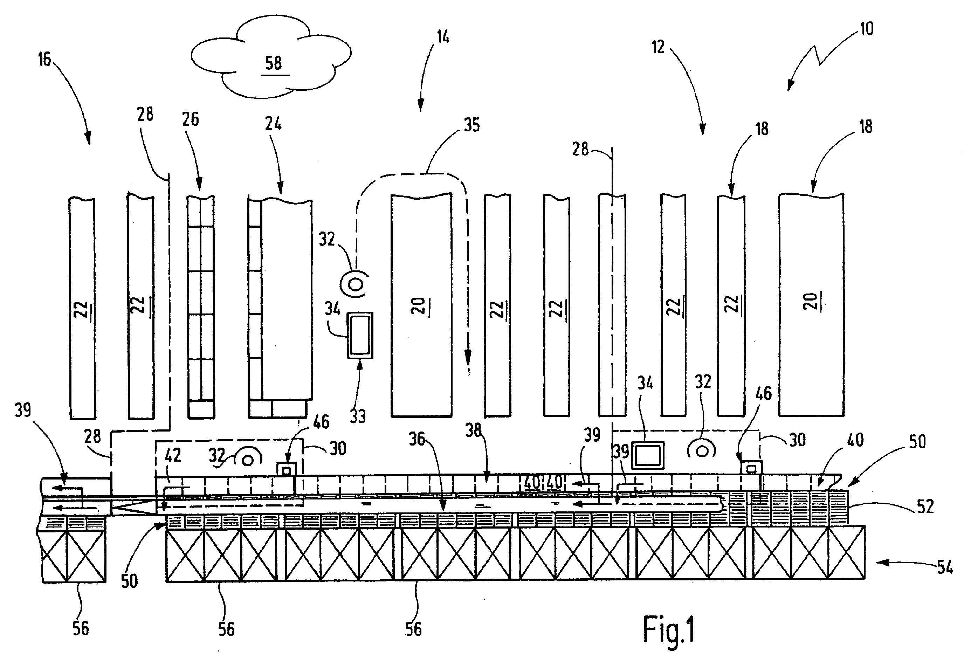

Bezug nehmend auf Fig. 1 ist eine Draufsicht auf ein erfindungsgemäßes Lager- und Kommissioniersystem 10 gezeigt.

Das Lager- und Kommissioniersystem 10 weist hier exemplarisch drei Kommissionierzonen auf. Jede Kommissionierzone umfasst jeweils einen Lagerbereich 12, 14 bzw. 16 mit jeweils einer zugeordneten Kommissionierstation 30 auf. jeder der Lagerbereiche 12, 14, bzw. 16 weist Regalblöcke 18 unterschiedlicher Größe auf. In der Fig. 1 ist exemplarisch ein großes Regal 20 und ein kleineres Regal 22 gezeigt. Detaillierte Darstellungen der Regalblöcke 18 sind in Form eines kombinierten Regals 24 und eines Doppelregals 26 im Lagerbereich 14 gezeigt. Die Kommissionierzonen sind in der Fig. 1 mittels Hilfslinien 28 voneinander getrennt. Jede Kommissionierzone wird autark betrieben.

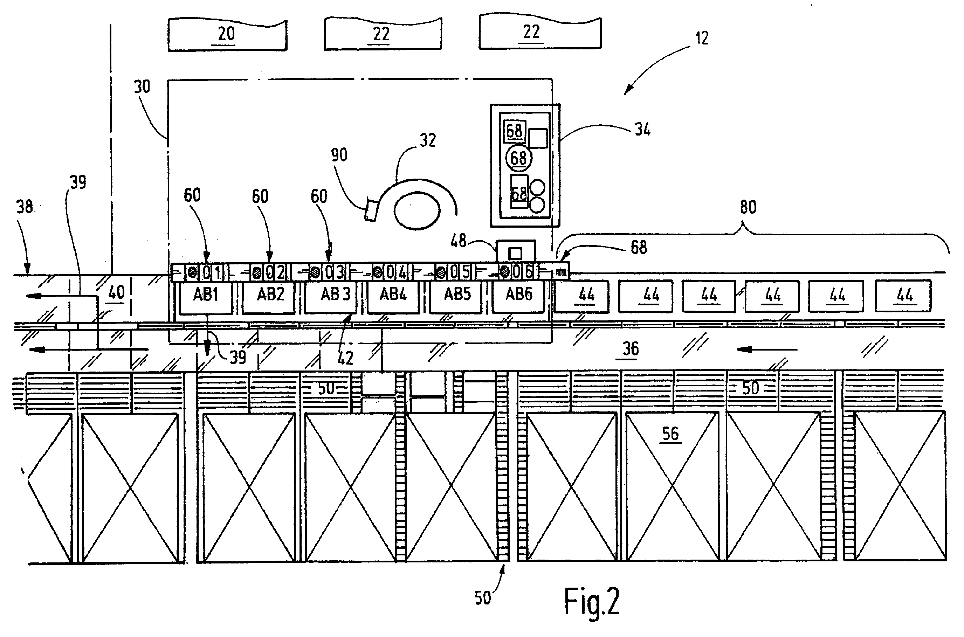

Jede Kommissionierzone weist mindestens eine Kommissionierstation 30 auf, die in Zusammenhang mit der Fig. 2 noch näher erläutert werden wird. In jeder Kommissionierzone arbeitet mindestens eine Kommissionierperson 32. In der Fig. 1 rechts dargestellten Kommissionierzone arbeitet eine Kommissionierperson 32. In der mittleren Kommissionierzone arbeiten zwei Kommissionierpersonen 32.

Um in einer ersten Stufe Artikel aus den Lagerbereichen 12-16 zu holen, führt die Kommissionierperson 32 eine Sammeleinrichtung 33 mit sich. Bei der Sammeleinrichtung 33 kann es sich exemplarisch um einen Sammelbehälter auf Rollen, einen tragbaren Sammelkorb oder Ähnliches handeln. Ein Aufnahmevolumen der Sammeleinrichtung 33 ist so gewählt, dass alle Artikel einer Batch in der ersten Stufe eingesammelt werden können, um anschließend in einer zweiten Stufe auf eine Gruppe von Auftragsbehältern verteilt zu werden. In der Fig. 1 führt die Kommissionierperson 32 in der mittleren Kommissionierzone einen Kommissionierwagen 34 mit sich, um Artikel aus dem Lagerbereich 14 zu sammeln, die in der Kommissionierstation 30 dann durch andere Kommissionierpersonen 32 an Auftragsbehälter 44 (vgl. Fig. 2) abgegeben werden können. Die Auftragsbehälter 44 werden mittels einer Auftragsbehälter-Fördertechnik 36 in Richtung der Kommissionierstation bzw. der Kommissionierstationen 30 transportiert. Die Auftragsbehälter-Fördertechnik 36 dient zum Antransport und Abtransport von Auftragsbehältern 44. Die Auftragsbehälter-Fördertechnik 36 verbindet die Kommissionierzonen materialflusstechnisch miteinander. Auf diese Weist ist es möglich, dass Kommissionieraufträge in Form von Teilaufträgen in verschiedenen Kommissionierzonen abgearbeitet werden, wobei jeder Teilauftrag innerhalb einer Kommissionierzone als eigenständiger Kommissionierauftrag gehandhabt wird.

Mit Hilfe von Ein- und Ausschleuseinrichtungen, wie z.B. Schiebern, Hubriemenförderern, etc., die in der Fig. 1 mit Hilfe von Pfeilen 39 angedeutet sind, können die Auftragsbehälter 44 zwischen der Auftragsbehälter-Fördertechnik 36 und einer weiteren Fördertechnik 38 ausgetauscht werden. Die weitere Fördertechnik 38 verläuft vorzugsweise parallel zur Auftragsbehälter-Fördertechnik 36. Die weitere Fördertechnik 38 verläuft durch die Kommissionierstationen 30. Auf diese Weise lässt sich ein Behälterstrom während eines Kommissioniervorgangs von der Hauptfördertechnik 36 entkoppeln. Die Fördertechnik 36 und die weitere Fördertechnik 38 können in Form von verschiedenen Fördertypen, wie z.B. Kettenförderer, Riemenförderer, Bandförderer, Rollenförderer, etc., realisiert werden. Vorzugsweise werden Staufördersegmente 40, wie z.B. Staurollenförderer, eingesetzt.

Die weitere Fördertechnik 38 umfasst innerhalb des Bereichs der Kommissionierstation 30, die in Fig. 1 mit Hilfe einer Strichlinie angedeutet ist, mehrere Pufferplätze 42 (insbesondere 6 bis 8), die vorzugsweise in Form der Staufördersegmente 40 realisiert sind. Jeder Pufferplatz 42 dient zur Aufnahme eines Auftragsbehälters 44 in der Kommissionierstation 30.

An einem Eingang in die Kommissionierstation 30 kann eine hier nicht näher gezeigte Behältererkennungseinrichtung (z.B ein Scanner) vorgesehen sein, um jeden Auftragsbehälter 44 zu erfassen und zu identifizieren, der in die Kommissionierstation 30 einfährt. Dazu sind die Auftragsbehälter 44 vorzugsweise mit einer Behälterkennung, z.B. einem individualisierten Strichcode, versehen. Weitere Behältererkennungseinrichtungen sind vorzugsweise am Eingang jeder Kommissionierzone bzw. im Bereich der Ein- und Ausschleuseinrichtungen 39 vorgesehen.

Des Weiteren weist jede Kommissionierstation 30 eine vorzugsweise stationäre Artikelleseeinrichtung 46 auf. Die Artikelleseeinrichtung 46 kann z.B. in Form eines Barcodescanners 48 (vgl. Fig. 2) implementiert sein. Die Artikelleseeinrichtung 46 kann stationär im Bereich der Pufferplätze 42 angeordnet sein. Alternativ kann die Artikelleseeinrichtung auch von der Kommissionierperson 32 mitgeführt werden, wie es nachfolgend noch näher erläutert werden wird.

Ferner können im Bereich der weiteren Fördertechnik 38 und insbesondere im Bereich der Pufferplätze 42 innerhalb der Kommissionierstation 30 Durchlaufkanäle 50 angeordnet sein. Die Durchlaufkanäle 50, die hier in Fig. 1 exemplarisch in Form von Rollenbahnen (Schwerkraftbahnen) implementiert sind, dienen zum Andienen von vorzugsweise A-Artikeln, die relativ häufig zur Abarbeitung von Kommissionieraufträgen benötigt werden. In den Regalblöcken 18 werden vorzugsweise B- und C-Artikel gelagert.

Oberhalb der Durchlaufkanäle 50, ist hier exemplarisch ein Palettenlager 54 vorgesehen, welches beladene Paletten 56 bevorratet. Die Paletten 56 dienen als Nachschublager für die Durchlaufkanäle 50 und/oder die Lagerbereiche 12-16. Auf einer den Kommissionierstationen 30 gegenüberliegenden Seite könne die Durchlaufkanäle 50 mittels Regalbediengeräten und/oder Regalförderzeuge durch die Paletten 56 mit Nachschub versorgt werden. Der Nachschub erfolgt räumlich entkoppelt von den Kommissionierzonen, so dass die Kommissionierpersonen 32 ungestört arbeiten können.

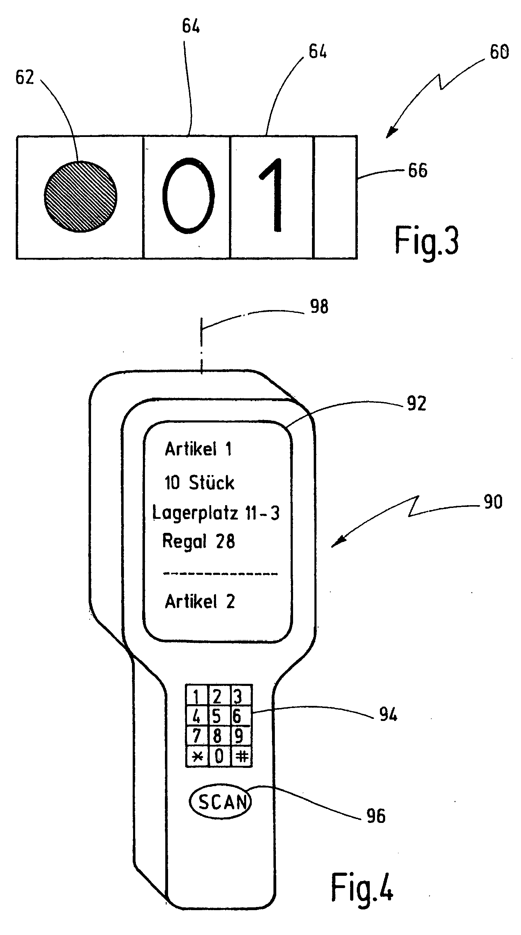

Die Durchlaufkanäle 50 verlaufen hier exemplarisch unterhalb der Auftragsbehälter-Fördertechnik 36 und enden vorzugsweise (oberhalb) in ergonomischer Greifhöhe ganz in der Nähe der Pufferplätze 42, so dass der Kommissionierer 32 ergonomisch günstig A-Artikel greifen kann und diese in die auf den Pufferplätzen 42 wartenden Auftragsbehälter 44 abwerfen kann. Der Abwurf erfolgt vorzugsweise mittels Lichtführung (Pick-by-Light), wozu Anzeigeeinrichtungen eingesetzt werden, wie sie unten im Zusammenhang mit den Fig. 2 und 3 noch genauer erläutert werden.

Alternativ können die Durchlaufkanäle 50 auch unterhalb der Förderer 36, 38 hindurchgeführt werden. Die Förderer 36, 38 können dann niveaugleich angeordnet werden. Eine Höhendifferenz ist dann nicht mehr zu überwinden.

Bezug nehmend auf Fig. 2 ist die Kommissionierstation 30 der in der Fig. 1 am weitesten rechts dargestellten Kommissionierzone, die den Lagerbereich 12 umfasst, in vergrößerter Darstellung gezeigt.

Die Kommissionierstation 30 der Fig. 2 weist sechs Pufferplätze 42 auf. Auf jedem Pufferplatz 42 steht ein Auftragsbehälter 44, die innerhalb der Kommissionierstation 30 mit AB1, ... , AB6 bezeichnet sind. Die Pufferplätze 42 bilden in diesem Sinne einen Auftragsbehälter-Puffer für die sechs Auftragsbehälter AB1-AB6. Auf der dem Kommissionierer 32 zugewandten Seite des Puffers ist für jeden Pufferplatz 42 eine Anzeigeeinrichtung 60 vorgesehen, die detaillierter im Zusammenhang mit der Fig. 3 beschrieben wird.

In der Fig. 3 ist eine Anzeigeeinrichtung 60 der Fig. 2 im Detail gezeigt. Die Anzeigeeinrichtung 60 weist hier z.B. eine Lampe 62 auf, die eingeschaltet und ausgeschaltet werden kann. Des Weiteren weist die Anzeigeeinrichtung 60 hier z.B. zwei Ziffernanzeigen 64 auf, um den Kommissionierer 32 eine Anzahl von in die zugeordneten Auftragsbehälter 44 abzugebenden Artikeln anzeigen zu können. Die Lampe 62 und die Ziffernanzeigen 64 sind hier exemplarisch in ein Gehäuse 66 integriert. Die Anzeigeeinrichtung 60 steht in Verbindung mit einer übergeordneten Steuereinrichtung 58, die in Fig. 1 mittels einer Wolke schematisch angedeutet ist. Ein Informationsaustausch zwischen der Steuereinrichtung 58, die in Form eines Rechners implementiert sein kann, erfolgt entweder über Leitungen oder drahtlos.

Zurückkehrend zur Fig. 2 ist im Bereich der Kommissionierstation 30 des Weiteren der Barcodescanner 48 zum Einlesen von Artikelkennungen von Artikeln vorgesehen, die während eines Verteilens von gesammelten Artikeln auf die Auftragsbehälter AB1-AB6 benötigt werden.

Am Eingang der weiteren Fördertechnik 38 in die Kommissionierstation 30 ist hier exemplarisch ein Behälterscanner 48 vorgesehen, der die Behälterkennungen liest und diese zum Zwecke der Zuordnung der Anzeigeeinrichtungen 60 der Pufferplätze 42 zu eingefahrenen Auftragsbehältern 44 an die Steuereinrichtung 58 übermittelt. Des Weiteren kann in diesem Bereich eine Kommissionierstationkennung z.B. in Form eines Strichcodes vorgesehen sein, damit sich ein Kommissionierer 32 an der Kommissionierstation 30 gegenüber der Steuereinrichtung 58 anmelden kann.

Außerdem ist in der Fig. 2 eine wartende Gruppe 80 von Auftragsbehältern 44 gezeigt, die die Auftragsbehälter AB1-AB6 ersetzen, sobald diese fertig kommissioniert sind und die Kommissionierstation 30 über eine Ausschleuseinrichtung 39 verlassen haben.

Ferner ist in Fig. 2 ein Sammelwagen 34 mit gesammelten Artikeln 68 gezeigt. Um die Artikel 68 in den Sammelwagen 34 ablegen zu können, wird dem Kommissionierer 32 ein Sammelauftrag zugewiesen und an eine Lese- und Anzeigeeinrichtung 90 übermittelt, die der Kommissionierer 32 permanent mit sich führen kann. Alternativ könnte die Lese- und Anzeigeeinrichtung 90 auch an der Sammeleinrichtung 33 befestigt sein.

Die Lese- und Anzeigeeinrichtung 90 ist in Fig. 4 exemplarisch in Form eines sogenannten "Hand-held-Terminal" gezeigt. Das Hand-held-Terminal der Fig. 4 weist ein Display 92, ein Eingabefeld 94, eine optionale Scan-Taste 96 sowie einen Scanner zum Aussenden eines Scan-Strahls 98 auf. Auf dem Display 92 wird dem Kommissionierer 32 der Sammelauftrag angezeigt, gemäß dem der Kommissionierer 32 entlang eines Kommissionierwegs 35 (vgl. Fig. 1) durch seinen, ihm zugeordneten Lagerbereich 12, 14 bzw. 16 läuft, um die Artikel 68 aus den Regalblöcken 18 zu holen.

Der Sammelauftrag wird in Abhängigkeit von den Kommissionieraufträgen erstellt, die der Gruppe 80 von Auftragsbehältern AB1-AB6 zugeordnet sind, die auf den Pufferplätzen 42 in der Kommissionierstation 30 stehen. Die Steuereinrichtung 58 generiert den Sammelauftrag wegoptimiert, d.h. der Weg 35 durch den entsprechenden Lagerbereich 12-16 ist so gewählt, dass er möglichst kurz ist. Der Sammelauftrag listet die verschiedenen Anlaufstellen (Bereitstellungsplätze) innerhalb des Regalbereichs 12-14 auf, um den Kommissionierer 32 anzuzeigen, wie viele Artikel er aus einem bestimmten Bereitstellungsplatz aus den Regalen zu holen hat. Unter einem Bereitstellungsplatz wird nachfolgend ein Lagerort verstanden, an dem vorzugsweise sortenrein Artikel eines bestimmten Typs gelagert sind.

Sobald der Kommissionierer 32 mit einem Sammelauftrag fertig ist, d.h. sowohl eingesammelt als auch auf die Auftragsbehälter verteilt hat, liest er die Kommissionierstationskennung ein und signalisiert so der Steuereinrichtung 58, dass er bereit ist, einen neuen Sammelauftrag anzunehmen. Vorzugsweise steht die nächste Gruppe von Auftragsbehältern bereits bereit und wird dann in die Kommissionierstation 30 eingefahren. Der zugehörige Sammelauftrag wurde bereits zuvor von der Steuereinrichtung 58 errechnet und wird dann an die Lese- und Anzeigeeinrichtung 90 des Kommissionierers 32 übermittelt. Der Kommissionierer 32 sammelt wieder alle Artikel 68 mit Hilfe der Sammeleinrichtung 33 ein und kehrt nachdem er alle Artikel 68 eingesammelt hat zur Kommissionierstation 30 zurück, um die Artikel 68 aus der Sammeleinrichtung 33 auf den Pufferplätzen 42 wartenden Auftragsbehältern AB1-AB6 zu verteilen.

Dazu liest er die Artikel 68 mittels der Artikelleseeinrichtung 46 ein. Die Steuereinrichtung 58 aktiviert daraufhin die Anzeigeeinrichtungen 60, z.B. indem die Lampen 62 eingeschaltet werden. Jeder Auftragsbehälter AB1-AB6, der diesen speziellen gerade gelesenen Artikeltyp benötigt, wird dann mittels seiner Lampe 62 beleuchtet. Optional kann auch mit den Zifferanzeigen 64 eine jeweilige Anzahl von Artikeln 68, die an die Auftragsbehälter AB1-AB6 abgegeben werden muss, angezeigt werden.

Alternativ kann jeder Artikel 68 des Sammelauftrags einzeln eingelesen und verteilt werden. In diesem Fall erübrigt sich die Anzeige der Anzahl der an die Auftragsbehälter AB1-AB6 abzugebenden Artikel 68.

Wenn zwei oder mehr Kommissionierer 32 parallel innerhalb einer Kommissionierstation 30 arbeiten, können z.B. die Lampen 62 farblich unterteilt sein, so dass es der Steuereinrichtung 58 möglich ist, jedem Kommissionierer 32 individuell anzuzeigen, welchen Auftragsbehälter AB1-AB6 er mit seinem gerade eingelesenen und identifizierten Artikeltyp zu bestücken hat.

Als weitere Alternative können mehrere Kommissionierer 32 sequentiell an der Kommissionierstation 30 arbeiten. Während ein erster Kommissionierer 32 Artikel 68 in der zweiten Stufe auf die Auftragsbehälter AB1-AB6 verteilt, kann ein anderer Kommissionierer 32 seinen Sammelauftrag abarbeiten, d.h. entlang des Kommissionierwegs 35 durch das Lager laufen, um die Artikel 68 gemäß der ersten Stufe einzusammeln.

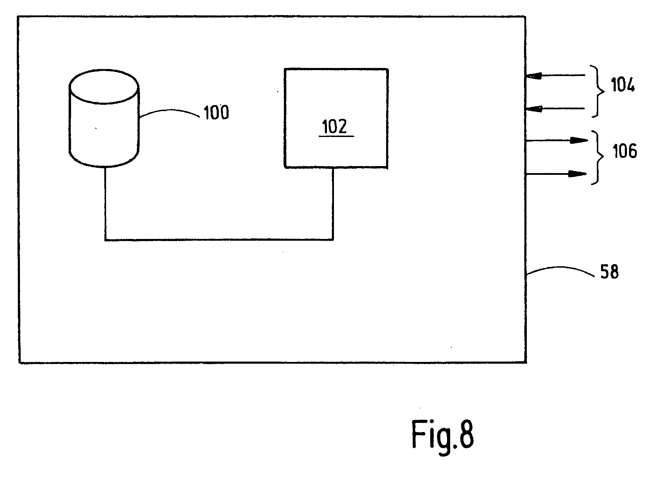

Um einen Sammelauftrag zu generieren, verfügt die Steuereinrichtung 58 über eine Datenbank 100, in der die Bereitstellungsplätze, die Kommissionierzonen bzw. Lagerbereiche 12-14, die entsprechenden Artikeltypen, die Artikelanzahlen, etc. hinterlegt sind (vgl. Fig. 8). Die Steuereinrichtung 58 verfügt über eine Einrichtung 102 zum Erzeugen von Sammelaufträgen. Die Steuereinrichtung 58 bekommt über ihre Eingänge 104 Informationen z.B. über die Auftragsbehälter 44, die mittels der Auftragsbehälter-Fördertechnik 36 durch das Lager- und Kommissioniersystem 10 transportiert werden. Jedem Auftragsbehälter 44 ist ein Kommissionierauftrag zugeordnet. Die Steuereinrichtung 58 kann in Abhängigkeit davon, ob ein Artikel 68 des Kommissionierauftrags in einem Lagerbereich 16-18 vorhanden ist, entscheiden, ob der entsprechende Auftragsbehälter 44 in Richtung der zu diesem, Lagerbereich 12-16 zugehörigen Kommissionierstation 30 ausgeschleust wird. Auf diese Weise ist es möglich, eine Gruppe 80 von Auftragsbehältern 44 zusammenzustellen. Sobald die Gruppe 80 von Auftragsbehältern 44 zusammengestellt ist, steht auch fest, welche Kommissionieraufträge zu der Gruppe 80 gehören. Aus diesen Kommissionieraufträgen wird dann mittels der Einrichtung 102 der Sammelauftrag erzeugt, wobei Wegoptimierungen berücksichtigt werden. Die Steuereinrichtung 58 kann über ihre Ausgänge 106, von denen hier ähnlich wie bei den Eingängen 104 exemplarisch nur zwei gezeigt sind, die entsprechenden Informationen an die Stellglieder und Anzeigeeinrichtungen des Systems 10 weiterleiten.

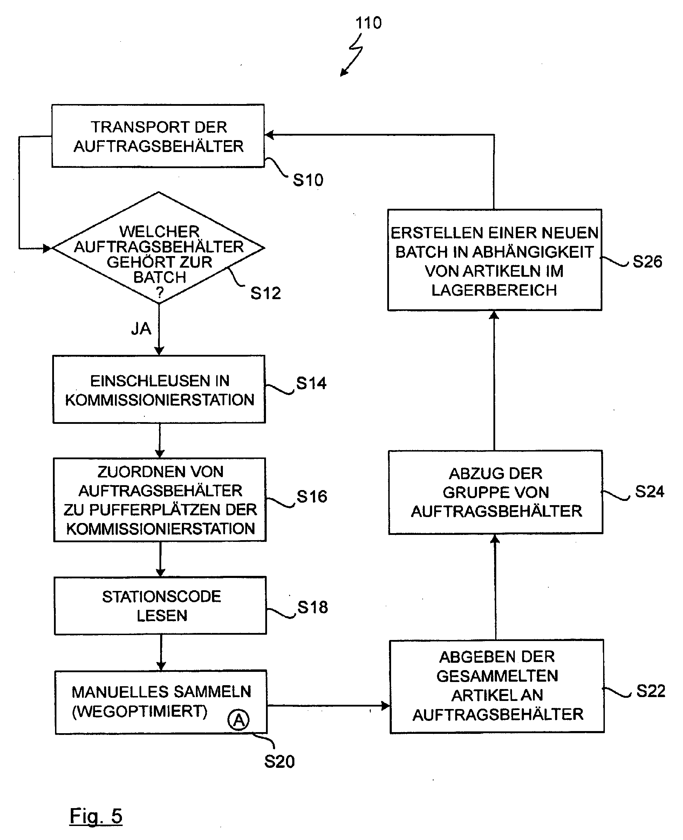

Dies spiegelt sich auch im erfindungsgemäßen Verfahren 110 der Fig. 5 wider, die ein schematisiertes Flussdiagramm des Verfahrens 110 zeigt.

In einem Schritt S10 werden die Auftragsbehälter innerhalb des Systems 10 transportiert. Die Steuereinrichtung 58 bildet Gruppen 80 von Auftragsbehältern 44 und überprüft in einem Schritt S10 an jedem Eingang einer Kommissionierzone, ob ein gerade passierender Auftragsbehälter 44 zu der Gruppe 80 gehört, der von der Auftragsbehälter-Fördertechnik 36 in die weitere Fördertechnik 38 in Richtung der zugehörigen Kommissionierstation 30 ausgeschleust werden soll. Gehört der Auftragsbehälter 44 nicht zur Gruppe 80, darf er ohne Ausschleusung passieren. Gehört der Auftragsbehälter jedoch zu der Gruppe 80, so wird er in einem Schritt S14 in die Kommissionierstation 30 eingeschleust. In einem Schritt S16 wird innerhalb der Kommissionierstation 30 jedem Auftragsbehälter 44 ein Pufferplatz 42 zugewiesen. Optional kann beim Schritt S16 am Eingang der Kommissionierstation 30 eine Behälterkennung nochmals erfasst werden, um eine sichere Zuordnung zwischen den Pufferplätzen 42 und den Auftragsbehältern 44 durchführen zu können.

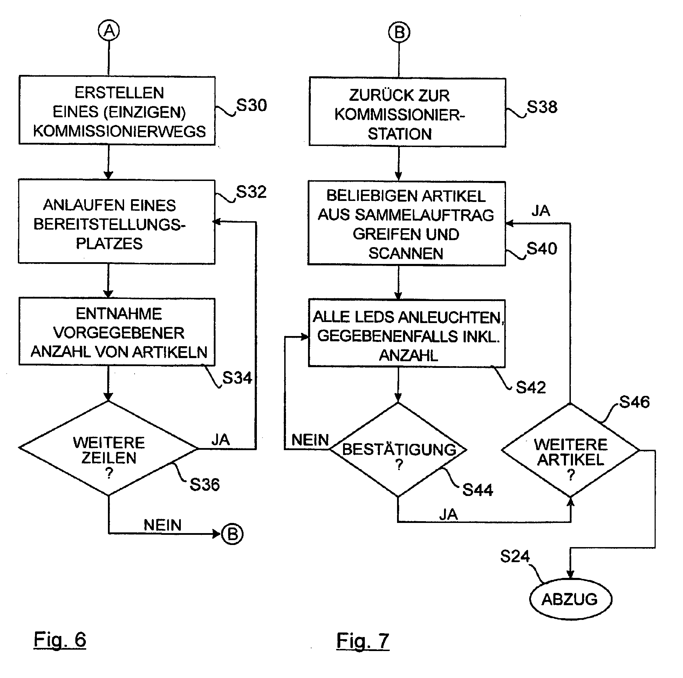

Optional kann in einem Schritt S18 der Kommissionierer 32 eine Kennung der Kommissionierstation 30 mit Hilfe seiner Lese- und Anzeigeeinrichtung 90 einlesen, um der Steuereinrichtung 58 zu signalisieren, dass er zur Abarbeitung eines Sammelauftrags (erste Kommissionierstufe) bereit ist. In einem Schritt S20 wird der Sammelauftrag dann manuell abgearbeitet, indem der Kommissionierer 32 entlang des wegoptimierten Wegs 35 durch den entsprechenden Lagerbereich 12-16 läuft und die durch den Sammelauftrag vorgegebenen Artikeln 68 aus den entsprechenden Bereitstellungsplätzen in den Regalblöcken 18 entnimmt. Der Schritt S20 wird im Zusammenhang mit der Fig. 6 noch näher erläutert werden.

In einem Schritt S22 gibt der Kommissionierer 32 die gesammelten Artikel 68 an die auf den Pufferplätzen 42 wartenden Auftragsbehälter AB1-AB6 ab. Sobald alle Auftragsbehälter AB1-AB6 der Gruppe 80 innerhalb der Kommissionierstation 30 mit den entsprechenden Artikeln 68 bestückt sind, werden die Auftragsbehälter AB1-AB6 abgezogen, indem sie von der weiteren Fördertechnik 38 auf die Auftragsbehälter-Fördertechnik 36 eingeschleust werden (vgl. Schritt S24).

In einem Schritt S26 wird nach einer Abarbeitung des Sammelauftrags eine neue Batch für diese Kommissionierstation 30 in Abhängigkeit von den Artikeln 68 erzeugt, die in dem der Kommissionierstation 30 zugeordneten Lagerbereich 12, 14 bzw. 16 bevorratet sind, und der Prozess beginnt von vorne.

Bezugnehmend auf Fig. 6 ist der Schritt S20 der Fig. 5 genauer dargestellt.

In einem Schritt S30 wird ein einziger Kommissionierweg 35, sofern keine sperrigen Artikel 68 im Kommissionierauftrag enthalten sind, erzeugt. Der Schritt S30 kann zeitlich vor einem Einschleusen (vgl. Schritt S14 der Fig. 5) der Auftragsbehälter 44 in die Kommissionierstation 30 erfolgen, nämlich bereits dann, wenn die Steuereinrichtung 58 eine Gruppe 80 von Auftragsbehältern 44 für einen der spezifischen Lagerbereiche 12-14 in Abhängigkeit von den in den entsprechenden Kommissionieraufträgen aufgelisteten Artikeln 68 erstellt.

In einem Schritt S32 läuft der Kommissionierer 32 die Bereitstellungsplätze gemäß dem Sammelauftrag an und entnimmt in einem Schritt S34 eine durch den Sammelauftrag vorgegebene Anzahl von Artikeln 68 aus den Bereitstellungsplätzen. Anschließend überprüft der Kommissionierer 32 in einem Schritt S36, ob weitere Auftragszeilen abzuarbeiten sind. Sind weitere Auftragszeilen des Sammelauftrags abzuarbeiten, kehrt er zum Schritt S32 zurück. Sind keine weiteren Auftragszeilen abzuarbeiten, kehrt er zur Kommissionierstation 30 zurück, wie es näher im Zusammenhang mit der Fig. 7 erläutert wird.

Bezugnehmend auf Fig. 7 kehrt der Kommissionierer 32 in einem Schritt S38 zur Kommissionierstation 30 zurück. Anschließend entnimmt der Kommissionierer 32 einen beliebigen Artikel 68 aus der Sammeleinrichtung 33, den er während seines Gangs durch den Lagerbereich 12-16 stets mit sich geführt hat. Im Schritt S40 wird der entnommene Artikel 68 dann erfasst, zum Beispiel gescannt, und durch die Steuereinrichtung 58 identifiziert. Die Steuereinrichtung 58 gibt dann in einem Schritt S42 entsprechende Signale an die Anzeigeeinrichtung 60 aus, die solchen Auftragsbehältern AB1-AB6 zugeordnet sind, die den gerade identifizierten Artikeltyp benötigen. Gegebenenfalls wird auch gleichzeitig die Anzahl der Artikel 68 des identifizierten Artikeltyps angezeigt. In einem Schritt S44 wird abgefragt, ob die Abgabe der gesammelten Artikel 68 in die Auftragsbehälter AB1-AB6 bereits bestätigt wurde. Liegt keine Bestätigung vor, so bleiben die LEDs der Anzeigeeinrichtungen 60 weiterhin erleuchtet. Eine Bestätigung kann zum Beispiel dadurch erfolgen, dass der Kommissionierer 32 den nächsten Artikeltyp einliest oder dass oberhalb der Öffnungen der Auftragsbehälter AB1-AB6 Lichtgitter vorgesehen sind, mit denen sich der Einwurf der Artikel 68 in die Auftragsbehälter AB1-AB6 detektieren lässt. Im besten Fall kann auf diese Weise auch gezählt werden, wie viele Artikel 68 in einen entsprechenden Auftragsbehälter AB1-AB6 abgeworfen wurden. Das Vorsehen von Lichtgittern stellt eine zusätzliche Sicherheitsstufe dar, die die Anzahl von Kommissionierfehlern zusätzlich verringert.

Wenn eine Bestätigung vorliegt, wird in einem Schritt S46 abgefragt, ob weitere gesammelte Artikel 68 auf die wartenden Auftragsbehälter AB1-AB6 verteilt werden müssen. Müssen weitere Artikel 68 erteilt werden, kehrt man zum Schritt S40 zurück. Müssen keine weiteren Artikel 68 verteilt werden, geht man zum Schritt S24 der Fig. 5 über, so dass die fertig kommissionierten Auftragsbehälter AB1-AB6 aus der Kommissionierstation 30 abgezogen werden, und so Platz für die nächste Gruppe 80 von Auftragsbehältern 44 schaffen.

Alternativ zu dem oben erwähnten "Hand-Held Terminal" können auch andere Lese- und Anzeigevorrichtungen eingesetzt werden. Exemplarisch sei hier ein Ring-Scanner mit verbundenem Display genannt. Dieser Scanner wird ähnlich wie ein Ring auf einen Finger des Kommissionierers 32 gezogen und ist beispielsweise über Funk mit der Steuereinrichtung 58 verbunden, um zum Beispiel die Kommissionierstationskennung, eine Behälterkennung, eine Artikelkennung, einen Bereitstellungsplatzkennung und ähnliches an die Steuereinrichtung 58 zu übermitteln. Die Steuereinrichtung 58 übermittelt wiederum für den Kommissioniervorgang relevante Daten an den Kommissionierer 32, der diese Daten dann über das Display angezeigt bekommt. Ein derartiges Display kann zum Beispiel an den Unterarm des Kommissionierers 32 geschnallt werden. Über das Display kommt der Kommissionierer 32 zum Beispiel auch seinen Sammelauftrag angezeigt. Gegebenenfalls kann der Kommissionierer 32 auch den in der zweiten Kommissionierstufe zu befüllenden Auftragsbehälter AB1-AB6 angezeigt bekommen, sollten die Anzeigeeinrichtungen 60 z.B. wegen eines Defekts ausgefallen sein.

Die Artikelleseeinrichtung 46 kann beispielsweise in den Sammelwagen 34 integriert sein. Die Artikelleseeinrichtung 46 an einem beliebigen Ort in der Nähe der Pufferplätze 42 stationär angeordnet sein, was jedoch die von dem Kommissionierer 32 zurückzulegenden Wege mitunter verlängern kann.

## Patentansprüche

1. Verfahren zum Betreiben eines Lager- und Kommissioniersystems (10), das in einem Batch-Betrieb betrieben wird, mit den folgenden Schritten:
Erfassen einer Vielzahl von Kommissionieraufträgen, wobei jedem Kommissionierauftrag, der aus einer Vielzahl von verschiedenen Artikeltypen in unterschiedlichen Anzahlen bestehen kann, ein Auftragsbehälter (44, AB1...AB6) zugewiesen wird;
Bestimmen einer Gruppe (80) von Auftragsbehältern (44), deren Kommissionieraufträge alle Artikel (68) aus einem einzigen Lagerbereich (12; 14, 16) benötigten, dem wiederum eine Kommissionierstation (30) zugeordnet ist;
Verbringen der Gruppe (80) von Auftragsbehältern (44) in die Kommissionierstation (30), wobei jeder Auftragsbehälter (44) auf einem von mehren Pufferplätzen (42) in der Kommissionierstation (30) zwischengespeichert wird, wobei jeder Pufferplatz (42) eine Anzeigeeinrichtung (60) aufweist;
Bestimmen eines Sammelauftrags aus den Kommissionieraufträgen, die der Gruppe (80) von Auftragsbehältern (44) zugeordnet ist;
Entnehmen der zu kommissionierenden Artikel (68) aus dem Lagerbereich (12; 14, 16) gemäß dem Sammelauftrag, indem eine Kommissionierperson (32) wegoptimiert durch den Lagerbereich (12; 14, 16) läuft, die Artikel (68) des Sammelauftrags in entsprechender Anzahl aus angezeigten Bereitstellungsplätzen entnimmt und zum Zwecke einer Zwischenspeicherung ungeordnet in eine transportable Sammeleinrichtung (33) gibt, die die Kommissionierperson (32) mit sich führt;
sobald alle Artikel (68) des Sammelauftrags entnommen und zwischengespeichert sind, manuelles Verteilen der entnommene Artikel auf die Gruppe der Auftragsbehälter in der Kommissionierstation (30), wobei mindestens ein Artikel (68) jedes entnommenen Artikeltyps erfasst und erkannt wird, bevor der Kommissionierperson (32) mittels der Anzeigeeinrichtungen (60) angezeigt wird, in welchen Auftragsbehälter (AB1-AB6) wie viele Artikel (68) des erfassten Artikeltyps aus der Sammeleinrichtung (33) umzusetzen sind.

2. Verfahren nach Anspruch 1, wobei jeder entnommene Artikel (68) des Sammelauftrags vor dem Verteilen erfasst und erkannt wird, indem die Kommissionierperson (32) jeden entnommen Artikel (68) in der Kommissionierstation (30) einzeln scannt, wobei die Anzeigeeinrichtung (60) der Pufferplätze (42) lediglich anzeigen muss, in welchen Auftragsbehälter (AB1-AB6) der eine erkannte Artikel (68) umzusetzen ist.

3. Verfahren nach Anspruch 1 oder 2, wobei jeder Lagerbereich (12; 14; 16) von mehr als einer Kommissionierperson (32) gleichzeitig bedient wird, wobei jeder Kommissionierperson (32) ein individuelles Anzeigesignal zugeordnet ist, um Auftragsbehälter (44) in der Kommissionierstation (30) mittels der Anzeigeeinrichtung (60) anzuzeigen.

4. Verfahren nach einem der vorhergehenden Ansprüche, wobei der Kommissionierperson die Bereitstellungsplätze vor einer Entnahme mittels einer Lese- und Anzeigeeinrichtung (90), die die Kommissionierperson (32) mit sich führen kann, angezeigt werden.

5. Verfahren nach Anspruch 4, wobei die Bereitstellungsplätze vor einer Artikelentnahme erfasst und an eine Steuereinrichtung (58) übermittelt werden.

6. Verfahren nach einem der vorhergehenden Ansprüche, wobei eine Abarbeitung einer Gruppe von Kommissionieraufträgen durch Erfassen einer Kennung der Kommissionierstation (30) initiiert wird.

7. Verfahren nach einem der vorhergehenden Ansprüche, wobei ein Teilkommissionierauftrag betreffend einen sperrigen Artikel separat zum Sammelauftrag eines restlichen Kommissionierauftrags, der nur normal handhabbare Artikel (68) enthält, in Form eines Einzelauftrags abgearbeitet wird.

8. Verfahren nach einem der vorhergehenden Ansprüche, wobei für jeden Auftragsbehälter (44) eine Behälterkennung erfasst wird, die dem Pufferplatz (42) zugeordnet wird, auf dem der jeweilige Auftragsbehälter (44) in der Kommissionierstation (30) zwischengespeichert wird.

9. Lager- und Kommissioniersystem (10) zum parallelen manuellen Abarbeiten einer Gruppe von Kommissionieraufträgen im Batch-Betrieb mit:
einer Auftragsbehälter-Fördertechnik (36) zum automatisierten An- und Abtransport von Auftragsbehältern (44);
einer Kommissionierstation (30), wobei die Kommissionierstation (30) mehrere Pufferplätze (42) zur jeweiligen Aufnahme und Zwischenspeicherung eines Auftragsbehälters (44) aus einer Gruppe (80) von Auftragsbehältern (44) aufweist, wobei jedem Auftragsbehälter (44) ein Kommissionierauftrag der Gruppe von Kommissionieraufträgen zugeordnet ist;
einem Lagerbereich (12; 14; 16), der der Kommissionierstation (30) zugeordnet ist und in welchem Artikel (68), die zur Abarbeitung der Gruppe von Kommissionieraufträgen benötigt werden, vorzugsweise sortenrein, in Bereitstellungsplätzen bevorratet sind;
einer transportablen Sammeleinrichtung (33), die von einer Kommissionierperson (32) während eines Sammelvorgangs durch den Lagerbereich (12; 14; 16) mitgeführt wird, um in einer ersten Stufe alle Artikel (68), die zur Abarbeitung der Gruppe von Kommissionieraufträgen benötigt werden, aus dem Lagerbereich (12; 14; 16) zu holen, indem die Artikel (68) entnommen und in der Sammeleinrichtung (33) zwischengespeichert werden;
einer Lese und Anzeigeeinrichtung (90), die der Kommissionierperson (32) zugeordnet ist, die die Kommissionierperson (32) mit sich führt und über die die Kommissionierperson (32) basierend auf den Kommissionieraufträgen Informationen zu Artikeln (68) im Lagerbereich (12; 14; 16) anzeigbar sind;
einer Artikelleseeinrichtung (46) zum Erfassen und Erkennen von gesammelten Artikeln (68) des Sammelauftrags nach Artikeltyp;
einer Vielzahl von Anzeigeeinrichtungen (60), wobei jedem Pufferplatz (42) eine Anzeigeeinrichtung (60) zugeordnet ist; und
einer Steuereinrichtung (58), die angepasst ist:
die Gruppe (80) von Auftragsbehältern (44) für die Kommissionierstation (30) in Abhängigkeit von den im Lagerbereich (12; 14; 16) bevorrateten Artikeln (68) zusammenzustellen und zum Lagerbereich (12; 14; 16) zu bewegen;
einen wegoptimierten Sammelauftrag für die Artikel (68) des Lagerbereichs (12; 14; 16) gemäß der Gruppe von Kommissionieraufträgen zu erzeugen;
der Kommissionierperson (32) den Sammelauftrag anzuzeigen;
die Anzeigeeinrichtungen (60) der Pufferplätze (42) derart zu betätigen, dass der Kommissionierperson (32), nach Beendigung des Sammelvorgangs gemäß der ersten Stufe, in einer zweiten Stufe basierend auf einem zuvor mittels der Artikelleseeinrichtung (46) erkannten Artikels (68) des Sammelauftrags, angezeigt wird, in welchen Auftragsbehälter (44) der erkannte Artikel (68) zu geben ist; und
die Gruppe (80) von Auftragsbehältern (44) aus der Kommissionierstation (30) abzutransportieren, wenn alle Artikel (68) gemäß dem zweiten Schritt auf die Gruppe (80) der Auftragsbehälter (44) verteilt sind.

10. System nach Anspruch 9, wobei der Lagerbereich (12; 14; 16) gegenüberliegend zur Kommissionierstation (30) angeordnet ist und vorzugsweise Regale (18; 20; 22) aufweist.

11. System nach Anspruch 10, wobei in den Regalen (12, 14; 16) im Wesentlichen B- und/oder C-Artikel gelagert werden.

12. System nach einem der Ansprüche 9 bis 11, wobei der Lagerbereich (12; 14; 16) ferner Durchlaufkanäle (50) aufweist, die direkt an die Kommissionierstation (30) angrenzen, wobei in den Durchlaufkanälen (50) im Wesentlichen A-Artikel bevorratet werden.

13. System nach einem der Ansprüche 9 bis 12, wobei die Pufferplätze (42) durch Fördertechnik (38), insbesondere Staufördersegmente (40), implementiert sind.

14. System nach Anspruch 13, wobei die Fördertechnik (38) der Kommissionierstation (30) über Ein- und Ausschleuseinrichtungen (39) an die Auftragsbehälter-Fördertechnik (36) gekoppelt ist und vorzugsweise im Wesentlichen parallel zur Auftragsbehälter-Fördertechnik (36) angeordnet ist.

15. System nach einem der Ansprüche 9 bis 14, wobei die Lese- und Anzeigeeinrichtung (90) ein Hand-held-Terminal (90) mit integriertem Scanner oder ein Finger-Scanner mit einem verbundenen Display (92) ist, wobei der Fingerscanner ringähnlich ausgebildet ist und wobei das Display (92) am Körper der Kommissionierperson (32), vorzugsweise an einem der Arme der Kommissionierperson, anbringbar ist.

16. System nach einem der Ansprüche 9 bis 15, wobei die Anzeigeeinrichtungen (60) der Pufferplätze (42) jeweils mindestens einen optischen Signalgeber (62; 64) aufweisen, um zumindest den Pufferplatz (42), und vorzugsweise auch eine von Eins unterschiedliche Anzahl von umzusetzenden Artikeln (68) des Sammelauftrags, gegenüber der Kommissionierperson (32) anzuzeigen.

17. System nach einem der Ansprüche 9 bis 16, wobei jeder Bereitstellungsplatz jeweils mit einem weiteren Anzeigeelement versehen ist, wobei die weiteren Anzeigeelemente den Ort und/oder eine zu entnehmende Artikelanzahl gegenüber der Kommissionierperson (32) signalisieren.

18. System nach einem der Ansprüche 9 bis 17, wobei die Artikelleseeinrichtung (46) ein Scanner (48) ist, der entweder an der Kommissionierstation (30) oder der Sammeleinrichtung (33) montiert ist.

## Claims

1. A method for operating a storage and order-picking system (10) in a batch mode, including the following steps:
detecting a plurality of picking orders, wherein each of the picking orders, which can comprise a plurality of different types of articles in different numbers, is assigned to an order container (44, OC1...OC6);
determining a group (80) of order containers (44), the picking orders of which do all require articles (68) from one single warehouse area (12; 14, 16) which in turn is assigned to an order-picking station (30);
moving the group (80) of order containers (44) to the order-picking station (30), wherein each of the order containers (44) is buffered at one of several buffer locations (42) in the order-picking station (30), wherein each of the buffer locations (42) comprises one display device (60);
determining a collecting order from the picking orders which is assigned to the group (80) of order containers (44);
removing the to-be-picked articles (68) from the warehouse area (12; 14, 16) in accordance with the collecting order while the order-picking person (32) walks in a route-optimized manner through the warehouse area (12; 14, 16), removes the articles (68) of the collecting order in accordance with a corresponding number from displayed provision locations and delivers the same unsorted to a transportable collecting device (33), which is carried by the order-picking person (32), for the purpose of buffering;
as soon as all of the articles (68) of the collecting order are removed and buffered, manually distributing the removed articles to the group of order containers in the order-picking station (30), wherein at least one article (68) of each type of article removed is detected and identified before the order-picking person (32) is - signalled by means of the display devices (60) to which of the order containers (OC1-OC6) a certain number of articles (68) of the detected type of article is to be transferred from the collecting device (33).

2. The method of claim 1, wherein each of the removed articles (68) of the collecting orders is detected and identified before the step of distributing the same while the order-picking person (32) individually scans each of the removed articles (68) at the order-picking station (30), wherein the display devices (60) of the buffer locations (42) only need to display to which of the order containers (OC1-OC6) the identified article (68) is to be transferred to.

3. The method of claim 1 or 2, wherein each of the warehouse areas (12; 14; 16) is simultaneously served by more than one order-picking person (32), wherein each of the order-picking persons (32) is assigned an individual display signal for displaying order containers (44) at the order-picking station (30) by means of the display device (60).

4. The method of any of the preceding claims, wherein the order-picking person is signalled the provision locations before removal by means of a reading and displaying device (90) which can be carried by the order-picking person (32).

5. The method of claim 4, wherein the provision locations are detected before the removal of articles, and transmitted to the controlling device (58).

6. The method of any of the preceding claims, wherein processing the group of picking orders is started by detecting an identification of the order-picking station (30).

7. The method of any of the preceding claims, wherein a partial-picking order relating to a bulky article is processed in terms of an individual order separately from the collecting order of a remaining picking order, which only comprises articles (68) being handable normally.

8. The method of any of the preceding claims, wherein a container identification is detected for each of the order containers (44), the container identification being assigned to the buffer location (42) where the respective order container (44) is buffered at the order-picking station (30).

9. A storage and order-picking system (10) for manually processing in parallel a group of picking orders in batch operation comprising:
an order-container conveyor (36) for automatically feeding and discharging order containers (44);
an order-picking station (30), wherein the order-picking station (30) comprises a plurality of buffer locations (42) which are adapted for respectively receiving and buffering one of the order containers (44) of the group (80) of order containers (44), wherein each of the order containers (44) is assigned a picking order of the group of picking orders;
a warehouse area (12; 14; 16) which is assigned to the order-picking station (30) and in which the articles (68), which are required for processing the group of picking orders, are stored in provision locations, preferably by one sort only;
a transportable collecting device (33) which is carried by an order-picking person (32) through the warehouse area (12; 14; 16) during a collecting process for retrieving in a first stage all of the articles (68), which are required for processing the group of picking orders, from the warehouse area (12; 14; 16) by removing the articles (68) and buffering the same in the collecting device (33);
a reading and display device (90) which is assigned to the order-picking person (32) and carried by the order-picking person (32) for displaying to the order-picking person (32) information on the articles (68) in the warehouse area (12; 14; 16) based on the picking orders;
an article-reading device (46) for detecting and identifying selected articles (68) of the collecting order dependent on type of article;
a plurality of display devices (60), wherein each of the buffer locations (42) has assigned one display device (60); and
a controlling device (58) which is adapted to:
assemble the group (80) of order containers (44) for the order-picking station (30) dependent on the articles (68) being stored in the warehouse area (12; 14; 16), and move the same to the warehouse area (12; 14; 16);
generate a route-optimized collecting order for the articles (68) of the warehouse area (12; 14; 16) according to the group of picking orders;
displaying the collecting order to the order-picking person (32);
operate the display devices (60) of the buffer locations (42) such that the order-picking person (32), after completing the collecting process in accordance with the first stage, in a second stage based on articles (68) of the collecting order being identified once by means of the article-reading device (46), is signalled to which of the order containers (44) the identified article (68) is to be delivered; and
transport away the group (80) of order containers (44) from the order-picking station (30), if all of the articles (68) in accordance with the second stage are distributed to the group (80) of order containers (44).

10. The system of claim 9, wherein the warehouse area (12; 14; 16) is oppositely arranged relative to the order-picking station (30) and preferably comprises racks (18; 20; 22).

11. The system of claim 10, wherein substantially B- and/or C-articles are stored in the racks (12, 14; 16).

12. The system of any of the claims 9 to 11, wherein the warehouse area (12; 14; 16) further comprises flow rack channels (50) directly adjacent to the order-picking station (30), wherein the flow rack channels (50) substantially store A-articles.

13. The system of any of the claims 9 to 12, wherein the buffer locations (42) are implemented by a conveyor (38), in particular by means of accumulation conveyor segments (40).

14. The system of claim 13, wherein the conveyor (38) of the order-picking station (30) is coupled to the order-container conveyor (36) via feeding and discharging devices (39), and is arranged preferably substantially in parallel to the order-container conveyor (36).

15. The system of any of the claims 9 to 14, wherein the reading and display device (90) is a hand-held terminal (90) having an integrated scanner or finger scanner including a connected display (92), wherein the finger scanner is ring-liked shaped and wherein the display (92) can be mounted to a body of the order-picking person (32), preferably to one of the order-picking persons arms.

16. The system of any of the claims 9 to 15, wherein display devices (60) of the buffer locations (42) respectively comprise at least one optical signal transmitter (62; 64) for signalling to the order-picking person (32) at least the buffer location (42) and preferably also a number of to-be transferred articles (68) of the collecting order which is different from 1.

17. The system of any of the claims 9 to 16, wherein each of the provision locations is respectively provided with another displaying element, wherein the other displaying element signals to the order-picking person (32) the location and/or a number of articles to be removed.

18. The system of any of the claims 9 to 17, wherein the article-reading device (46) is a scanner (48) which is either mounted to the order-picking station (30) or the collecting device (33).

## Revendications

1. Procédé de gestion d'un système (10) d'entreposage et d'expédition conduit par lots, le procédé comportant les étapes suivantes :
saisie de plusieurs tâches d'expédition, un récipient de tâche (44, AB1...AB6) étant attribué à chaque tâche d'expédition qui peut être constituée de plusieurs types d'articles différents en différents nombres,
détermination d'un groupe (80) de récipients de tâche (44) dont les tâches d'expédition reprennent tous les articles (68) d'une seule zone d'entreposage (12; 14, 16) à laquelle est lui-même associé un poste d'expédition (30),
amenée des groupes (80) de récipients de tâche (44) dans le poste d'expédition (30), chaque récipient de tâche (44) étant conservé temporairement en un ou plusieurs emplacements tampons (42) du poste d'expédition (30), chaque emplacement tampon (42) présentant un dispositif d'affichage (60),
à partir des tâches d'expédition, détermination d'une tâche de collecte associée aux groupes (80) de récipients de tâche (44),
prélèvement des articles (68) à expédier dans la zone d'entreposage (12; 14, 16) en fonction de la tâche de collecte par déplacement optimisé d'un opérateur d'expédition (32) dans la zone d'entreposage (12; 14, 16), prélèvement des articles (68) de la tâche de collecte en nombre approprié dans les emplacements de préparation indiqués et placement de ces articles en vue d'un entreposage intermédiaire dans un dispositif transportable de collecte (33) que l'opérateur d'expédition (32) emporte avec lui,
dès que tous les articles (68) de la tâche de collecte ont été prélevés et entreposés temporairement, répartition manuelle des articles prélevés dans le groupe de récipients de tâche du poste d'expédition (30), au moins un article (68) de chaque type d'article prélevé étant saisi et reconnu avant que soit indiqué à l'opérateur d'expédition (32) au moyen des dispositifs d'affichage (60) le nombre d'articles (68) du type d'article saisi qui doit être déplacé du dispositif de collecte (33) à un récipient de tâche (AB1-AB6).

2. Procédé selon la revendication 1, dans lequel chaque article (68) prélevé de la tâche de collecte est saisi et reconnu avant la répartition par le fait que dans le poste d'expédition (30), l'opérateur d'expédition (32) scanne un à un les articles (68) prélevés, le dispositif d'affichage (60) de l'emplacement tampon (42) devant uniquement indiquer dans quel récipient de tâche (AB1-AB6) chaque article (68) reconnu doit être placé.

3. Procédé selon les revendications 1 ou 2, dans lequel chaque zone d'entreposage (12; 14, 16) est desservie simultanément par plus d'un opérateur d'expédition (32), un signal d'indication individuel étant associé à chaque opérateur d'expédition (32) pour indiquer les récipients de tâche (44) du poste d'expédition (30) au moyen du dispositif d'affichage (60).

4. Procédé selon l'une des revendications précédentes, dans lequel avant le prélèvement, les emplacements de préparation sont indiqués à l'opérateur d'expédition au moyen d'un dispositif de lecture et d'affichage (90) que l'opérateur d'expédition (32) emporte avec lui.

5. Procédé selon la revendication 4, dans lequel les emplacements de préparation sont saisis avant le prélèvement d'un article et sont transmis à un dispositif de commande (58).

6. Procédé selon l'une des revendications précédentes, dans lequel le traitement d'un groupe de tâches d'expédition est lancé par saisie d'une caractéristique du poste d'expédition (30).

7. Procédé selon l'une des revendications précédentes, dans lequel une tâche partielle d'expédition concernant un article encombrant est traitée sous la forme d'une tâche distincte, séparément de la tâche de collecte du reste d'une tâche d'expédition qui contient uniquement des articles (68) manipulables normalement.

8. Procédé selon l'une des revendications précédentes, dans lequel pour chaque récipient de tâche (44), une caractéristique du récipient associée à l'emplacement tampon (42) sur lequel chaque récipient de tâche (44) est conservé temporairement dans le poste d'expédition (30) est saisie.

9. Système (10) d'entreposage et d'expédition permettant de traiter en parallèle et manuellement un groupe de tâches d'expédition par lots, le système présentant :
un ensemble technique (36) de transport de récipients de tâche permettant l'amenée et l'évacuation automatique de récipients de transport (44),
un poste d'expédition (30), le poste d'expédition (30) présentant plusieurs emplacements tampons (42) qui permettent chacun de reprendre et d'entreposer temporairement un récipient de tâche (44) d'un groupe (80) de récipients de tâche (44), une tâche d'expédition du groupe de tâches d'expédition étant associée à chaque récipient de tâche (44),
une zone d'entreposage (12; 14, 16) associée au poste d'expédition (30) et dans lequel des articles (68) nécessaires pour le traitement du groupe de tâches d'expédition, de préférence sans tri, sont mis en réserve dans des emplacements de préparation,
un dispositif transportable de collecte (33) emporté par un opérateur d'expédition (32) pendant une opération de collecte dans la zone d'entreposage (12; 14, 16) pour, dans une première étape, reprendre dans la zone d'entreposage (12; 14, 16) tous les articles (68) nécessaires pour le traitement du groupe de tâches d'expédition par le fait que les articles (68) sont prélevés et conservés temporairement dans le dispositif de collecte (33),
un dispositif (90) de lecture et d'affichage associé à l'opérateur d'expédition (32), que l'opérateur d'expédition (32) emporte avec lui et par lequel des informations concernant les articles (68) présents dans la zone d'entreposage (12; 14, 16) peuvent être transmises à l'opérateur d'expédition (32) sur base des tâches d'expédition,
un dispositif (46) de lecture d'articles qui saisit et reconnaît en fonction du type d'article les articles (68) rassemblés dans la tâche de collecte,
plusieurs dispositifs d'affichage (60), un dispositif d'affichage (60) étant associé à chaque emplacement tampon (42), et
un dispositif de commande (58) adapté pour:
rassembler le groupe (80) de récipients de tâche (44) prévus pour le poste d'expédition (30) en fonction des articles (68) conservés en réserve dans la zone d'entreposage (12; 14, 16) et les déplacer vers la zone d'entreposage (12; 14, 16),
former une tâche de collecte à parcours optimisé pour les articles (68) de la zone d'entreposage (12; 14, 16) en fonction du groupe de tâches d'expédition,
indiquer à l'opérateur d'expédition (32) la tâche de collecte,
activer les dispositifs d'affichage (60) des emplacements tampons (42) de telle sorte que lorsque l'opération de collecte est terminée dans une première étape, il soit indiqué à l'opérateur d'expédition (32) dans une deuxième étape les articles (68) reconnus précédemment au moyen du dispositif (46) de lecture d'articles de la tâche de collecte dans quel récipient de tâche (44) l'article (68) reconnu doit être placé, et
évacuer le groupe (80) de récipients de tâche (44) hors du poste d'expédition (30) lorsque dans la deuxième étape, tous les articles (68) ont été répartis dans le groupe (80) de récipients de tâche (44).

10. Système selon la revendication 9, dans lequel la zone d'entreposage (12; 14, 16) est disposée face au poste d'expédition (30) et présente de préférence des étagères (18; 20; 22).

11. Système selon la revendication 10, dans lequel essentiellement des articles B et/ou des articules C sont entreposés dans les étagères (12, 14; 16).

12. Système selon l'une des revendications 9 à 11, dans lequel la zone d'entreposage (12; 14; 16) présente en outre des canaux de passage (50) directement adjacents au poste d'expédition (30), essentiellement des articles A étant conservés en réserve dans les canaux de passage (50).

13. Système selon l'une des revendications 9 à 12, dans lequel les emplacements tampons (42) sont configurés sous la forme d'un ensemble technique de transport (38), en particulier sous la forme de segments (40) de transporteur-accumulateur.

14. Système selon la revendication 13, dans lequel l'ensemble technique de transport (38) du poste d'expédition (30) est accouplé à l'ensemble technique (36) de transport de récipients de tâche par l'intermédiaire de dispositifs (39) à sas d'entrée et à sas de sortie et est disposé de préférence essentiellement en parallèle à l'ensemble technique (36) de transport de récipients de tâche.

15. Système selon l'une des revendications 9 à 14, dans lequel le dispositif (90) de lecture et d'affichage est un terminal portable (90) à scanner intégré ou un scanner à doigt raccordé à un affichage (92), le scanner à doigt étant configuré en anneau et l'affichage (92) pouvant être placé sur le corps de l'opérateur d'expédition (32), de préférence sur l'un des bras de l'opérateur d'expédition.

16. Système selon l'une des revendications 9 à 15, dans lequel les dispositifs d'affichage (60) des emplacements tampons (42) présentent chacun au moins un émetteur (62; 64) de signaux optiques et indiquent à l'opérateur d'expédition (32) au moins l'emplacement tampon (42) et de préférence aussi un nombre d'articles (68), différent de un, à déplacer dans la tâche de collecte.

17. Système selon l'une des revendications 9 à 16, dans lequel chaque emplacement de préparation est doté d'un autre élément d'affichage, les autres éléments d'affichage signalant l'emplacement et/ou le nombre d'articles à prélever à l'opérateur d'expédition (32).

18. Système selon l'une des revendications 9 à 17, dans lequel le dispositif (46) de lecteur d'article est un scanneur (48) monté sur le poste d'expédition (30) ou sur le dispositif de collecte (33).
